# EUROPEAN PATENT SPECIFICATION

(11) **EP 4 498 658 B1**
(45) Date of publication and mention of the grant of the patent: **30.09.2026**
(21) Application number: 23845331.0
(22) Date of filing: 13.07.2023
(51) Int. Cl.: H04L 67/1095, G06F 3/0481, G06F 9/451, G06F 16/2458, G06F 16/2455, G06F 16/27

(54) **DATA SYNCHRONIZATION METHOD, ELECTRONIC DEVICE AND SYSTEM**
DATENSYNCHRONISATIONSVERFAHREN, ELEKTRONISCHE VORRICHTUNG UND SYSTEM
PROCÉDÉ DE SYNCHRONISATION DE DONNÉES, DISPOSITIF ÉLECTRONIQUE ET SYSTÈME

(30) Priority: 26.07.2022 CN 202210883769
(43) Date of publication of application: 29.01.2025
(60) Divisional application: 26201161.2
(73) Proprietor: Huawei Technologies Co., Ltd., Shenzhen, Guangdong 518129 (CN)
(72) Inventor: WANG, Hancai, Shenzhen, Guangdong 518129 (CN); GONG, Ashi, Shenzhen, Guangdong 518129 (CN); LI, Youfu, Shenzhen, Guangdong 518129 (CN); LIU, Wenhui, Shenzhen, Guangdong 518129 (CN)
(74) Representative: Pfenning, Meinig & Partner mbB
(86) International application number: PCT/CN2023/107206
(87) International publication number: WO 2024/022119

(56) References cited:
- EP-A1- 4 102 368
- EP-A1- 4 224 294
- CN-A- 112 291 764
- CN-A- 112 486 363
- CN-A- 112 486 363
- CN-A- 114 296 948
- CN-A- 114 296 948
- CN-A- 114 490 719
- US-A1- 2020 183 525
- US-A1- 2021 173 838
- US-A1- 2023 208 790

## Description

### TECHNICAL FIELD

Embodiments of this application relate to the field of terminal technologies, and in particular, to a data synchronization method and system, and an electronic device.

### BACKGROUND

In a distributed scenario, cross-device data access may be implemented between different electronic devices. For example, in response to a user operation, a first electronic device (for example, a tablet) accesses, in a cross-device manner, application data of a first application that is in a second electronic device and that is indicated by the user operation. Then, the first electronic device may select, from the obtained application data, interface data of the first application corresponding to the indication of the user operation, to display a corresponding interface, for example, display a home page of the application or a function page in the application.

However, for cross-device data access between electronic devices, a user may indicate the first electronic device to display different interfaces. Therefore, the first electronic device may request to obtain all application data of the first application. However, if all the application data of the application is synchronized, a large amount of data is transmitted, resulting in high power consumption. In addition, in all the synchronized application data, application data that needs to be used by the first electronic device in response to the user operation may account for only a small proportion, and invalid data accounts for a high proportion.
CN 114296948 A discloses a cross-device application invoking method and an electronic device, relate to the field of electronic device technologies, and can reduce operation complexity and improve work efficiency of a user. The specific solution includes: A first electronic device may display a first interface in response to a first operation performed by the user on target data; and then, the first electronic device sends a first message to a second electronic device in response to a second operation performed by the user on an icon of a first application in icons of a plurality of applications.

### SUMMARY

The invention is defined by the appended set of claims. To resolve the foregoing technical problem, this application provides a data synchronization method and system, and an electronic device. According to the technical solutions provided in this application, a first electronic device may request, from a second electronic device based on a user operation, to obtain data of a to-be-displayed interface of a first application in the second electronic device. In this way, data synchronization of invalid data is effectively reduced, and cross-device data access overheads are reduced.

To achieve the foregoing technical objective, embodiments of this application provide the following technical solutions.

According to a first aspect, a data synchronization method is provided. The method includes: A first electronic device sends a first data request to a second electronic device in response to a first operation of a user, where the first data request is used to request data required for a first interface that the first operation indicates to display, and the first interface corresponds to a first application in the second electronic device; the first electronic device receives first data sent by the second electronic device, where the first data is data determined by the second electronic device in response to the first data request; the first electronic device displays the first interface in response to the received first data; the first electronic device sends a second data request to the second electronic device in response to a second operation of the user, where the second data request is used to request data required for a second interface that the second operation indicates to display, and the second interface corresponds to the first application; the first electronic device receives second data sent by the second electronic device, where the second data is data determined by the second electronic device in response to the second data request, and the second data is different from the first data; and the first electronic device displays the second interface in response to the received second data, wherein the first electronic device is configured to determine a data query condition in response to the first operation, wherein the data query condition is used to query the data required for displaying the first interface, and the data request carries the data query condition.

Optionally, the first application includes an application (APP) or a service (for example, a task manager service or an installation package management service) in the second electronic device. In response to the first operation, the first electronic device and the second electronic device may synchronize application data or service data required for the interface that the first operation indicates to display.

Optionally, the first interface is an interface to be displayed by the first electronic device in response to a user operation. The first data includes data of the to-be-displayed interface indicated by the user operation and data of an interface associated with the to-be-displayed interface, or the first data includes data of the to-be-displayed interface indicated by the user operation.

In this way, in a cross-device data access process, data transmitted between the first electronic device and the second electronic device is data used by the first electronic device to display the to-be-displayed interface, and is no longer full data of an application. This effectively reduces a data transmission amount and reduces power consumption of the electronic devices

Optionally, the data query condition may include one or more of an application name, row information, column information, water level information, and the like that correspond to to-be-queried data.

In this way, the second electronic device can determine, based on the data query condition, interface data requested by the first electronic device.

According to the first aspect or any implementation of the first aspect, the method further includes: The first electronic device obtains third data that meets the data query condition and that is in local data, and determines first information of the third data, where the first data request further carries the first information, and the first information includes one or more of the following information of the third data: row information, column information, and water level information.

For example, after receiving the first data request, the second electronic device can determine partial data of the first application based on the data query condition. Then, the second electronic device can determine, from the partial data based on the first information, the first data that is not stored in the first electronic device, to determine to send, to the first electronic device, the first data that is not stored in the first electronic device and that is in the data required for displaying the first interface.

In this way, in the cross-device data access process, an amount of data transmitted between the electronic devices is further reduced, and power consumption of the electronic devices is reduced.

According to the first aspect or any implementation of the first aspect, that the first electronic device obtains third data that meets the data query condition and that is in local data, and determines first information of the third data includes: The first electronic device queries the third data that meets the data query condition and that is in the local data stored in a first storage space; and the first electronic device determines the first information of the third data after caching the third data into a second storage space.

Optionally, the first storage space is, for example, a disk, and the second storage space is, for example, a shared memory. Compared with that in the disk, a data read/write speed in the shared memory is higher. After the data used for displaying the first interface is cached into the shared memory, an application process may directly obtain the data of the first interface from the shared memory. This improves the data read/write speed and accordingly improves interface display efficiency.

According to the first aspect or any implementation of the first aspect, that the first electronic device displays the first interface in response to the received first data includes: The first electronic device updates the third data in the second storage space based on the received first data; and the first electronic device displays the first interface based on updated data in the second storage space.

For example, after receiving the first data, the first electronic device updates, based on the first data, data that corresponds to the first interface and that is stored in the shared memory. Then, the first electronic device may display the first interface based on updated data in the shared memory.

According to the first aspect or any implementation of the first aspect, the method further includes: The first electronic device updates the local data based on the first data.

For example, after receiving the first data, the first electronic device updates, based on the first data, data that is of the first application and that is stored in the disk. In this way, subsequently, in response to an operation of indicating, by the user, to display an interface of the first application, the first electronic device may obtain updated data of the first application from the disk.

According to a second aspect, a data synchronization method is provided. The method includes: A second electronic device receives a first data request sent by a first electronic device, where the first data request is a request that is determined by the first electronic device in response to a first operation of a user and that is used to obtain data required for a first interface that the first operation indicates to display, and the first interface corresponds to a first application in the second electronic device; the second electronic device determines first data based on the first data request; the second electronic device sends the first data to the first electronic device, where the first data is used by the first electronic device to display the first interface; the second electronic device receives a second data request sent by the first electronic device, where the second data request is a request that is determined by the first electronic device in response to a second operation of the user and that is used to obtain data required for a second interface that the second operation indicates to display, and the second interface corresponds to the first application; the second electronic device determines second data based on the second data request, where the second data is different from the first data; and the second electronic device sends the second data to the first electronic device, where the second data is used by the first electronic device to display the second interface.

According to the second aspect, that the second electronic device determines first data based on the first data request includes: The second electronic device obtains a data query condition carried in the first data request, and determines the first data that meets the data query condition.

According to the second aspect or any implementation of the second aspect, that the second electronic device determines first data based on the first data request includes: The second electronic device obtains first information and the data query condition carried in the first data request, where the first information is information, determined by the first electronic device, about third data that is in the first electronic device and that meets the data query condition, and the first information includes one or more of the following information of the third data: row information, column information, and water level information; the second electronic device determines fourth data that meets the data query condition; and the second electronic device determines, based on the first information, the first data that needs to be synchronized and that is in the fourth data.

According to the second aspect or any implementation of the second aspect, that the second electronic device determines, based on the first information, the first data that needs to be synchronized and that is in the fourth data includes: The second electronic device determines, based on the first information, that the fourth data includes a first row of data that does not exist in the third data, and determines that the first row of data is the first data; and/or the second electronic device determines, based on the first information, a second row of data whose water level is higher than that of the third data and that is in the fourth data, and determines that the second row of data is the first data; and/or the second electronic device determines a first column of data based on the first information, where the first column of data is column data that is not included in the third data and that is in third rows of data with a same water level in the fourth data and the third data, and determines that the first column of data is the first data.

For technical effect corresponding to the second aspect and any implementation of the second aspect, refer to technical effect corresponding to the first aspect and any implementation of the first aspect. Details are not described herein again.

According to a third aspect, an electronic device is provided. The electronic device includes a processor, a display, and a memory. The memory and the display are coupled to the processor, the memory is configured to store computer program code, and the computer program code includes computer instructions. When the processor reads the computer instructions from the memory, the electronic device is enabled to perform the following: A first electronic device sends a first data request to a second electronic device in response to a first operation of a user, where the first data request is used to request data required for a first interface that the first operation indicates to display, and the first interface corresponds to a first application in the second electronic device; the first electronic device receives first data sent by the second electronic device, where the first data is data determined by the second electronic device in response to the first data request; the first electronic device displays the first interface in response to the received first data; the first electronic device sends a second data request to the second electronic device in response to a second operation of the user, where the second data request is used to request data required for a second interface that the second operation indicates to display, and the second interface corresponds to the first application; the first electronic device receives second data sent by the second electronic device, where the second data is data determined by the second electronic device in response to the second data request, and the second data is different from the first data; and the first electronic device displays the second interface in response to the received second data, wherein the first electronic device is configured to determine a data query condition in response to the first operation, wherein the data query condition is used to query the data required for displaying the first interface, and the data request carries the data query condition.

According to the third aspect, that a first electronic device sends a first data request to a second electronic device in response to a first operation of a user includes: The first electronic device determines a data query condition in response to the first operation, where the data query condition is used to query the data required for displaying the first interface; and the first electronic device sends the first data request to the second electronic device, where the first data request carries the data query condition.

According to the third aspect or any implementation of the third aspect, the method further includes: The first electronic device obtains third data that meets the data query condition and that is in local data, and determines first information of the third data, where the first data request further carries the first information, and the first information includes one or more of the following information of the third data: row information, column information, and water level information.

According to the third aspect or any implementation of the third aspect, that the first electronic device obtains third data that meets the data query condition and that is in local data, and determines first information of the third data includes: The first electronic device queries the third data that meets the data query condition and that is in the local data stored in a first storage space; and the first electronic device determines the first information of the third data after caching the third data into a second storage space.

According to the third aspect or any implementation of the third aspect, that the first electronic device displays the first interface in response to the received first data includes: The first electronic device updates the third data in the second storage space based on the received first data; and the first electronic device displays the first interface based on updated data in the second storage space.

According to the third aspect or any implementation of the third aspect, when the processor reads the computer-readable instructions from the memory, the electronic device is further enabled to perform the following operation: The first electronic device updates the local data based on the first data.

For technical effect corresponding to the third aspect and any implementation of the third aspect, refer to technical effect corresponding to the first aspect and any implementation of the first aspect. Details are not described herein again.

According to a fourth aspect, an electronic device is provided. The electronic device includes a processor and a memory. The memory is coupled to the processor, the memory is configured to store computer program code, and the computer program code includes computer instructions. When the processor reads the computer instructions from the memory, the electronic device is enabled to perform the following: A second electronic device receives a first data request sent by a first electronic device, where the first data request is a request that is determined by the first electronic device in response to a first operation of a user and that is used to obtain data required for a first interface that the first operation indicates to display, and the first interface corresponds to a first application in the second electronic device; the second electronic device determines first data based on the first data request; the second electronic device sends the first data to the first electronic device, where the first data is used by the first electronic device to display the first interface; the second electronic device receives a second data request sent by the first electronic device, where the second data request is a request that is determined by the first electronic device in response to a second operation of the user and that is used to obtain data required for a second interface that the second operation indicates to display, and the second interface corresponds to the first application; the second electronic device determines second data based on the second data request, where the second data is different from the first data; and the second electronic device sends the second data to the first electronic device, where the second data is used by the first electronic device to display the second interface.

According to the fourth aspect, that the second electronic device determines first data based on the first data request includes: The second electronic device obtains a data query condition carried in the first data request, and determines the first data that meets the data query condition.

According to the fourth aspect or any implementation of the fourth aspect, that the second electronic device determines first data based on the first data request includes: The second electronic device obtains first information and the data query condition carried in the first data request, where the first information is information, determined by the first electronic device, about third data that is in the first electronic device and that meets the data query condition, and the first information includes one or more of the following information of the third data: row information, column information, and water level information; the second electronic device determines fourth data that meets the data query condition; and the second electronic device determines, based on the first information, the first data that needs to be synchronized and that is in the fourth data.

According to the fourth aspect or any implementation of the fourth aspect, that the second electronic device determines, based on the first information, the first data that needs to be synchronized and that is in the fourth data includes: The second electronic device determines, based on the first information, that the fourth data includes a first row of data that does not exist in the third data, and determines that the first row of data is the first data; and/or the second electronic device determines, based on the first information, a second row of data whose water level is higher than that of the third data and that is in the fourth data, and determines that the second row of data is the first data; and/or the second electronic device determines a first column of data based on the first information, where the first column of data is column data that is not included in the third data and that is in third rows of data with a same water level in the fourth data and the third data, and determines that the first column of data is the first data.

For technical effect corresponding to the fourth aspect and any implementation of the fourth aspect, refer to technical effect corresponding to the first aspect and any implementation of the first aspect. Details are not described herein again.

According to a fifth aspect, a data synchronization system is provided. The system includes a first electronic device and a second electronic device. The first electronic device is configured to send a first data request to the second electronic device in response to a first operation of a user, where the first data request is used to request data required for a first interface that the first operation indicates to display, and the first interface corresponds to a first application in the second electronic device. The second electronic device is configured to send first data to the first electronic device in response to the first data request. The first electronic device is further configured to display the first interface in response to the received first data. The first electronic device is further configured to send a second data request to the second electronic device in response to a second operation of the user, where the second data request is used to request data required for a second interface that the second operation indicates to display, and the second interface corresponds to the first application. The second electronic device is configured to send second data to the first electronic device in response to the second data request, where the second data is different from the first data. The first electronic device is further configured to display the second interface in response to the received second data.

According to the fifth aspect, the first electronic device is configured to determine a data query condition in response to the first operation, where the data query condition is used to query data required for displaying the first interface, and the data request carries the data query condition.

According to the fifth aspect or any implementation of the fifth aspect, the first electronic device is further configured to: obtain third data that meets the data query condition and that is in local data, and determine first information of the third data, where the first data request further carries the first information, and the first information includes one or more of the following information of the third data: row information, column information, and water level information.

According to the fifth aspect or any implementation of the fifth aspect, the second electronic device is configured to determine fourth data that meets the data query condition. The second electronic device is configured to determine, based on the first information, the first data that needs to be synchronized and that is in the fourth data, where the first data is different from the third data, or partial data in the first data corresponds to updated third data.

For technical effect corresponding to the fifth aspect and any implementation of the fifth aspect, refer to technical effect corresponding to the first aspect and any implementation of the first aspect. Details are not described herein again.

According to a sixth aspect, an embodiment of this application provides an electronic device, where the electronic device has a function of implementing the data synchronization method according to the first aspect and any possible implementation of the first aspect; or the electronic device has a function of implementing the data synchronization method according to the second aspect and any possible implementation of the second aspect. The function may be implemented by hardware, or may be implemented by hardware executing corresponding software. The hardware or the software includes one or more modules corresponding to the foregoing function.

For technical effect corresponding to the sixth aspect and any implementation of the sixth aspect, refer to technical effect corresponding to the first aspect and any implementation of the first aspect. Details are not described herein again.

According to a seventh aspect, a computer-readable storage medium is provided. The computer-readable storage medium stores a computer program (which may also be referred to as instructions or code). When the computer program is executed by an electronic device, the electronic device is enabled to perform the method according to the first aspect or any implementation of the first aspect; or the electronic device is enabled to perform the method according to the second aspect or any implementation of the second aspect.

For technical effect corresponding to the seventh aspect and any implementation of the seventh aspect, refer to technical effect corresponding to the first aspect and any implementation of the first aspect. Details are not described herein again.

According to an eighth aspect, an embodiment of this application provides a computer program product. When the computer program product runs on an electronic device, the electronic device is enabled to perform the method according to the first aspect or any implementation of the first aspect; or the electronic device is enabled to perform the method according to the second aspect or any implementation of the second aspect.

For technical effect corresponding to the eighth aspect and any implementation of the eighth aspect, refer to technical effect corresponding to the first aspect and any implementation of the first aspect. Details are not described herein again.

According to a ninth aspect, an embodiment of this application provides a circuit system. The circuit system includes a processing circuit. The processing circuit is configured to perform the method according to the first aspect or any implementation of the first aspect; or the processing circuit is configured to perform the method according to the second aspect or any implementation of the second aspect.

For technical effect corresponding to the ninth aspect and any implementation of the ninth aspect, refer to technical effect corresponding to the first aspect and any implementation of the first aspect. Details are not described herein again.

According to a tenth aspect, an embodiment of this application provides a chip system, including at least one processor and at least one interface circuit. The at least one interface circuit is configured to: perform a transceiver function, and send instructions to the at least one processor. When the at least one processor executes the instructions, the at least one processor performs the method according to the first aspect or any implementation of the first aspect; or the at least one processor performs the method according to the second aspect or any implementation of the second aspect.

For technical effect corresponding to the tenth aspect and any implementation of the tenth aspect, refer to technical effect corresponding to the first aspect and any implementation of the first aspect. Details are not described herein again.

### BRIEF DESCRIPTION OF DRAWINGS

FIG. 1 is a diagram 1 of an interface according to an embodiment of this application;
FIG. 2 is a diagram of a communication system to which a data synchronization method is applied according to an embodiment of this application;
FIG. 3A is a diagram of a hardware structure of a first electronic device or a second electronic device according to an embodiment of this application;
FIG. 3B-1 and FIG. 3B-2 are a block diagram of a software structure of a first electronic device or a second electronic device according to an embodiment of this application;

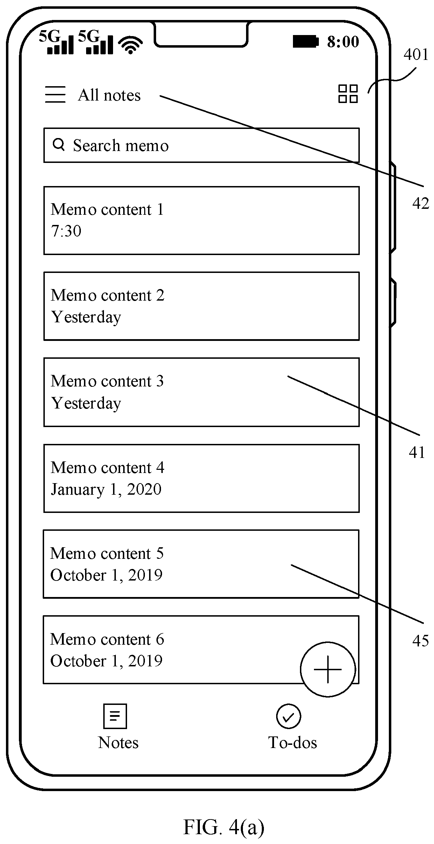

FIG. 4(a) to FIG. 4(c) are a diagram 2 of an interface according to an embodiment of this application;

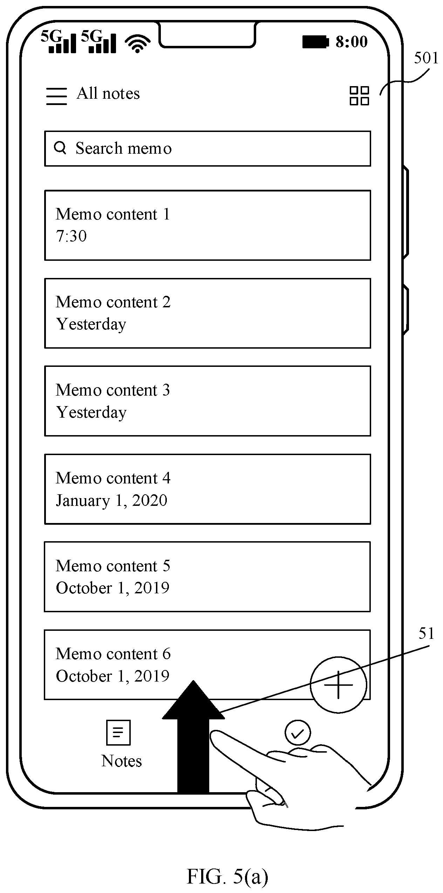

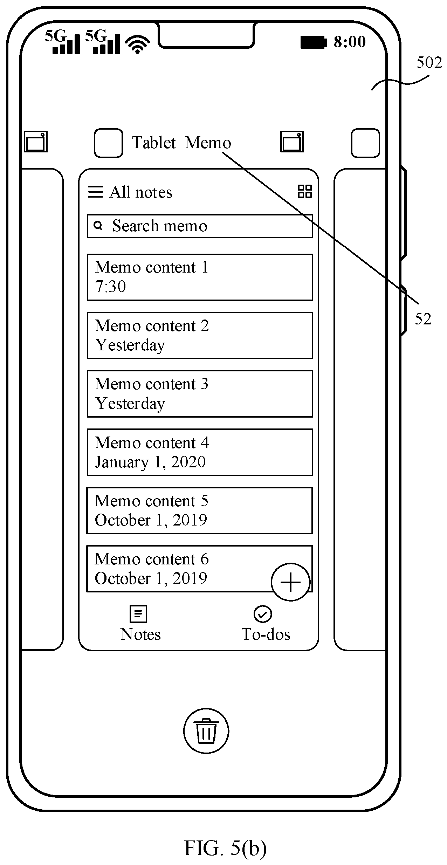

FIG. 5(a) and FIG. 5(b) are a diagram 3 of an interface according to an embodiment of this application;

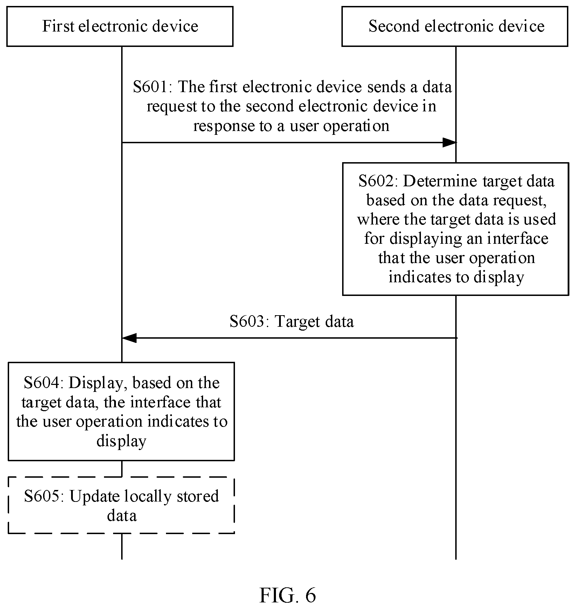

FIG. 6 is a schematic flowchart 1 of a data synchronization method according to an embodiment of this application;

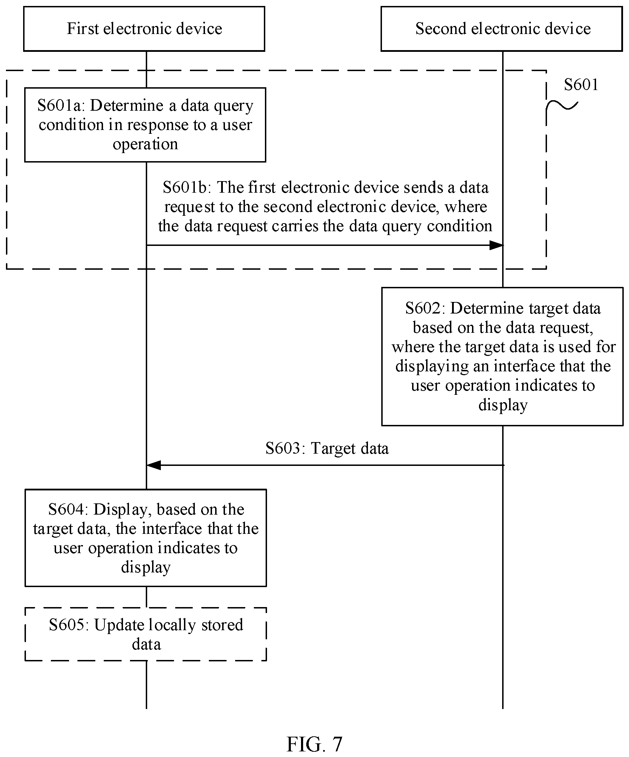

FIG. 7 is a schematic flowchart 2 of a data synchronization method according to an embodiment of this application;

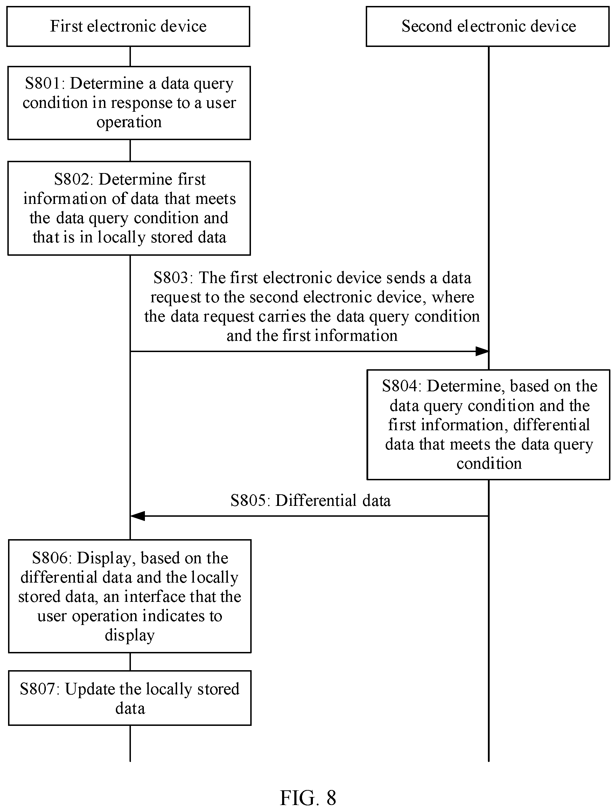

FIG. 8 is a schematic flowchart 3 of a data synchronization method according to an embodiment of this application;

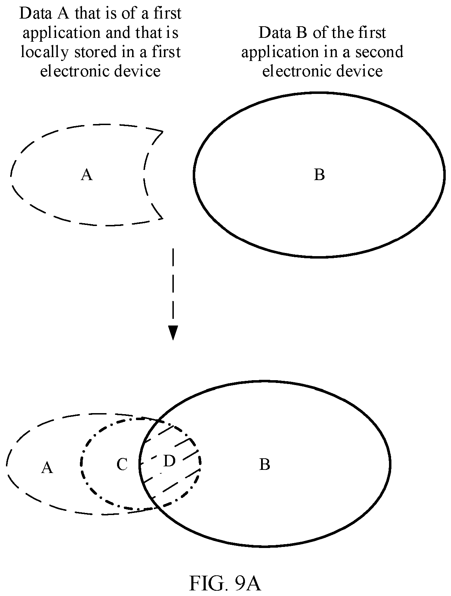

FIG. 9A is a diagram 1 of a data synchronization scenario according to an embodiment of this application;

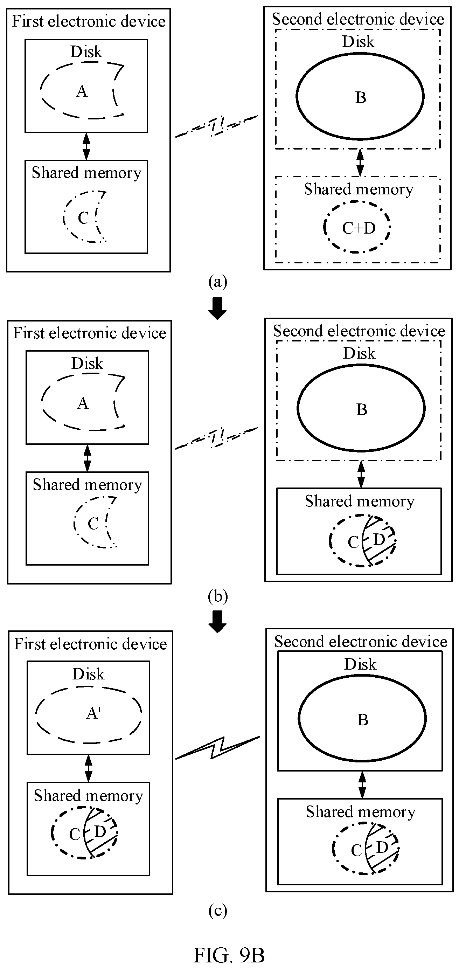

FIG. 9B is a diagram 2 of a data synchronization scenario according to an embodiment of this application;

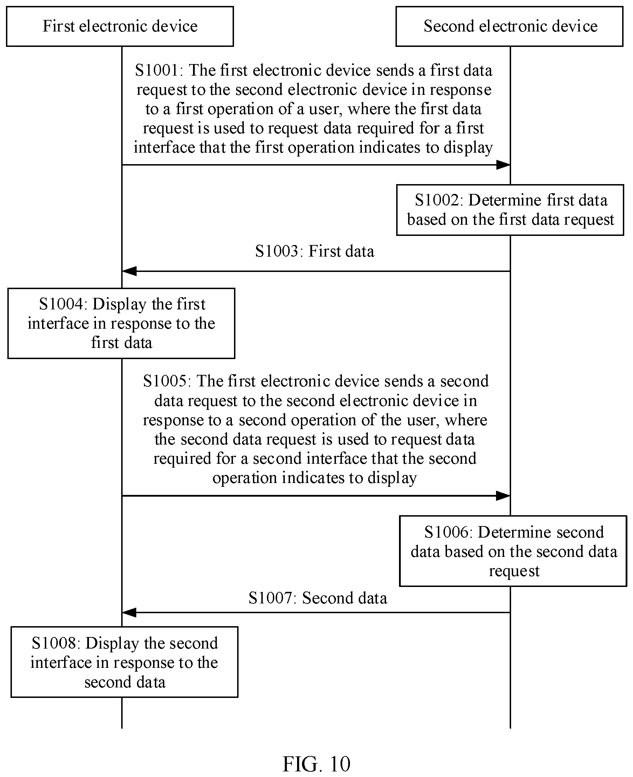

FIG. 10 is a schematic flowchart 4 of a data synchronization method according to an embodiment of this application;

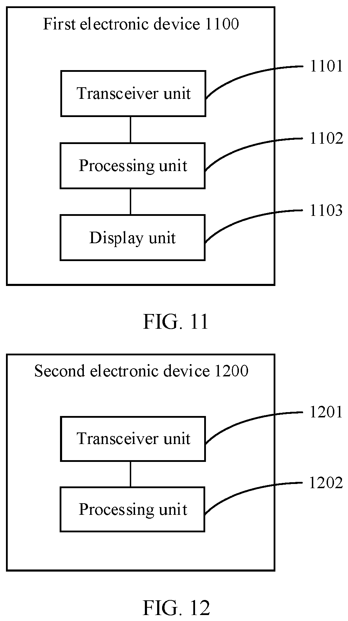

FIG. 11 is a diagram of a structure of a first electronic device according to an embodiment of this application; and
FIG. 12 is a diagram of a structure of a second electronic device according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended for a purpose of describing specific embodiments, but are not intended to limit this application. The terms "one", "a", "the", "the foregoing", "this", and "the one" of singular forms used in this specification and the appended claims of this application are intended to include expressions such as "one or more", unless otherwise specified in the context clearly. It should be further understood that in the following embodiments of this application, "at least one" and "one or more" mean one or more than two (including two).

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in still some other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, words such as "example" or "for example" are used to represent giving examples, illustrations, or descriptions. Any embodiment or design solution described as an "example" or "for example" in embodiments of this application should not be explained as being more preferred or having more advantages than another embodiment or design solution. Exactly, use of the words "example", "for example", or the like is intended to present a related concept in a specific manner.

In some scenarios, a distributed communication connection may be established between different electronic devices, to implement cross-device data access, and implement data synchronization between the different electronic devices in a cross-device data access process.

For example, a projection connection is established between a first electronic device and a second electronic device. The first electronic device may receive, through the projection connection, projection data sent by the second electronic device, where the projection data is data of an application in the second electronic device. The first electronic device displays a corresponding application interface based on the projection data. In this way, the first electronic device may implement cross-device access to data of the second electronic device.

For another example, after establishing a connection to the second electronic device, the first electronic device may obtain an application list of the second electronic device. Then, the first electronic device may display a corresponding application icon based on the application list. In response to an operation performed by a user on the application icon, the first electronic device may request, from the second electronic device, to obtain application data corresponding to the application icon, to implement cross-device access to the data in the second electronic device.

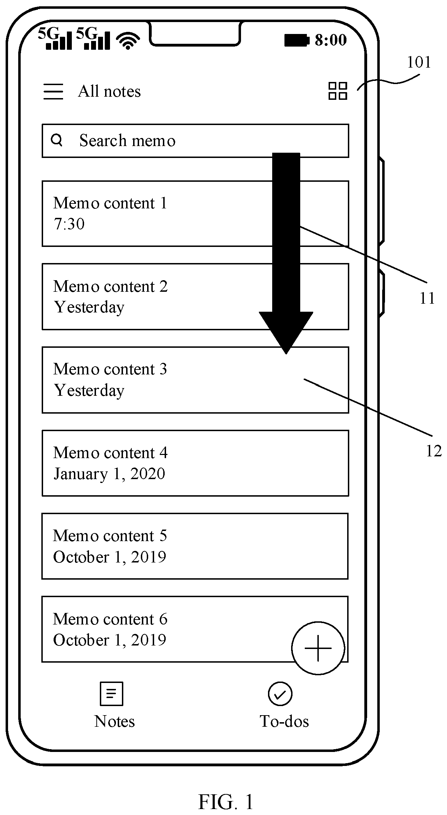

For example, a mobile phone establishes a communication connection to a tablet. In response to a user operation, the mobile phone displays an interface of a memo application in the tablet. As shown in FIG. 1, the mobile phone displays a home page interface 101 of the memo application. In response to an operation of sliding downward by the user in a direction shown by an arrow 11, the mobile phone may display a corresponding memo interface in a sliding manner. Alternatively, in response to an operation of tapping a control 12 by the user, the mobile phone may display a memo interface corresponding to memo content 3.

A user behavior is uncontrollable during use of an application. Therefore, in a process of accessing application data of another electronic device in a cross-device manner, after detecting, for the first time, an operation of indicating, by the user, to display the memo application in the tablet, the mobile phone requests to obtain full data of the memo application from the tablet. After synchronizing the full data locally, the mobile phone performs local data query.

For example, the mobile phone displays a memo icon based on the obtained application list of the tablet. In response to an operation performed by the user on the memo icon, the mobile phone requests to obtain the full data of the memo application from the tablet. Then, the mobile phone selects, from the obtained full data of the memo application, interface data required for a home page that is of the memo application and that needs to be displayed, and displays the home page of the memo application based on the interface data.

It can be learned that, in a current cross-device data access process of an electronic device, data synchronized by the electronic device at a single time is full data of an application or a service. However, data used in response to an indication of the user operation accounts for only a small proportion in the full data, and invalid data accounts for a high proportion. This causes a loss of performance and power consumption of the electronic device.

In addition, in the cross-device data access process of the electronic device, the full data of the application or the service is synchronized. In a next process in which the electronic device accesses a same application or service in a cross-device manner, the full data of the application or the service is still synchronized, and locally cached data of the application or the service is not used. Consequently, energy efficiency of a cross-device data access process is low.

In addition, in the cross-device data access process of the electronic device, the obtained full data of the application or the service needs to be first stored in a disk through an input/output (input/output, I/O) interface, and then, required data is selected from the disk. The selected data is output through the I/O interface. In this process, the electronic device needs at least one I/O interface write operation and one I/O interface read operation of the disk. However, a data read and write speed in the disk is low. This causes a loss of performance of the electronic device.

Therefore, an embodiment of this application provides a data synchronization method. In a process of accessing an application or a service in a second electronic device, a first electronic device may request, from the second electronic device in response to a user operation, to obtain data required for an interface that the user operation indicates to display. In this way, the first electronic device and the second electronic device need to transmit only partial data that is required for displaying an interface and that is in data of the application or the service. In this way, transmission of invalid data is reduced, an amount of synchronized data is reduced, data synchronization efficiency is improved, and power consumption is reduced.

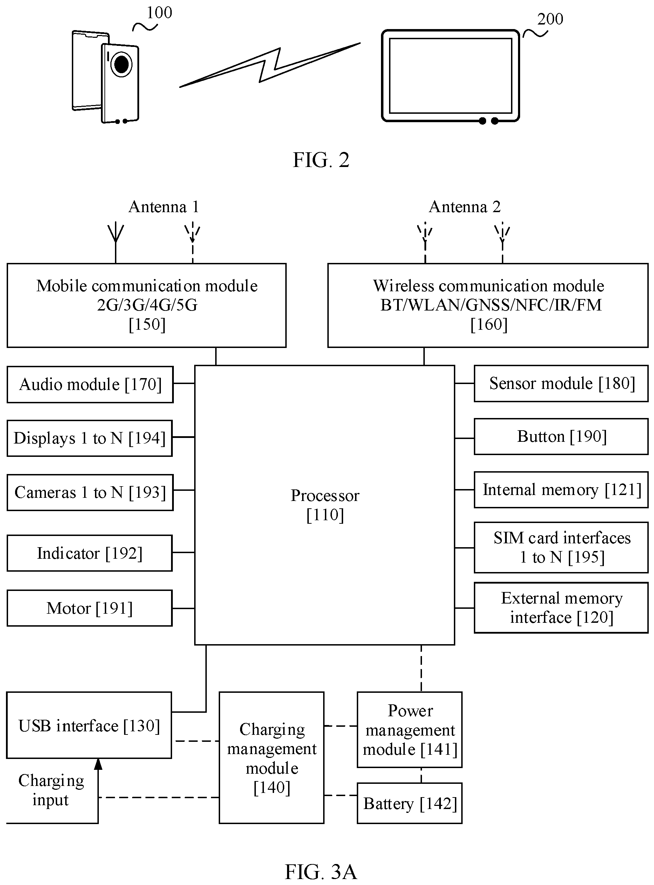

FIG. 2 is a diagram of a communication system to which a data synchronization method is applied according to an embodiment of this application. As shown in FIG. 2, the communication system includes a first electronic device 100 and a second electronic device 200.

Optionally, the first electronic device 100 is a receive device, and the second electronic device 200 is a source device. The first electronic device 100 accesses data of an application or a service in the second electronic device 200 in a cross-device manner, and synchronizes required application data or service data. For example, in response to a user operation, the first electronic device 100 accesses the second electronic device 200 in a cross-device manner, and synchronizes data based on a requirement. Then, the first electronic device 100 displays, based on the synchronized data, an interface that the user operation indicates to display.

Optionally, the first electronic device 100 or the second electronic device 200 may be, for example, a terminal device like a mobile phone, a tablet computer, a notebook computer, a large-screen device, an ultra-mobile personal computer (ultra-mobile personal computer, UMPC), a netbook, a personal digital assistant (personal digital assistant, PDA), a wearable device, or an artificial intelligence (artificial intelligence, AI) device. An operating system installed on the first electronic device 100 or the second electronic device 200 includes but is not limited to iOS^{®}, Android^{®}, Harmony^{®}, Windows^{®}, Linux^{®}, or another operating system. A specific type of the first electronic device 100 or the second electronic device 200 and an operating system installed on the first electronic device 100 or the second electronic device 200 are not limited in this application.

In an implementation, a wireless communication connection or a wired communication connection (for example, a connection through a network cable) is established between the first electronic device 100 and the second electronic device 200. A wireless communication technology for establishing the wireless communication connection includes but is not limited to at least one of the following: Bluetooth (Bluetooth, BT) (for example, conventional Bluetooth or Bluetooth low energy (Bluetooth low energy, BLE)), a wireless local area network (wireless local area network, WLAN) (for example, a wireless fidelity (wireless fidelity, Wi-Fi) network), near field communication (near field communication, NFC), ZigBee (ZigBee), frequency modulation (frequency modulation, FM), infrared (infrared, IR), an ultra wide band (ultra wide band, UWB) technology, and the like.

Optionally, the first electronic device 100 and the second electronic device 200 may alternatively establish a communication connection to each other through a third-party device in a local area network. The third-party device is, for example, a router, a gateway, an intelligent device controller, a server, or a wireless access point (access point, AP) device.

For example, both the first electronic device 100 and the second electronic device 200 support a proximity discovery function. For example, after the first electronic device 100 approaches the second electronic device 200, the first electronic device 100 and the second electronic device 200 can discover each other, and then establish a wireless communication connection like a Wi-Fi peer-to-peer (peer to peer, P2P) connection and/or a Bluetooth connection to each other. Then, the first electronic device 100 may access data of the second electronic device 200 through the wireless communication connection in response to a user operation.

For another example, the first electronic device 100 and the second electronic device 200 establish a wireless communication connection to each other through a local area network. For example, both the first electronic device 100 and the second electronic device 200 are connected to a same router.

For another example, the first electronic device 100 and the second electronic device 200 establish a wireless communication connection to each other through a cellular network, the internet, or the like. For example, the second electronic device 200 accesses the internet through the router, and the first electronic device 100 accesses the internet through the cellular network. In this way, the first electronic device 100 and the second electronic device 200 establish a wireless communication connection to each other.

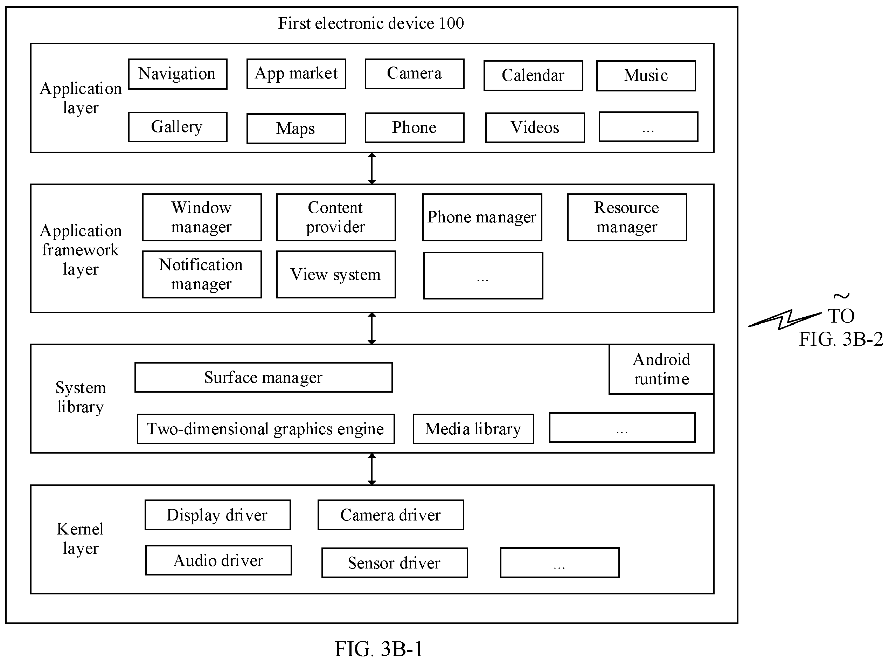

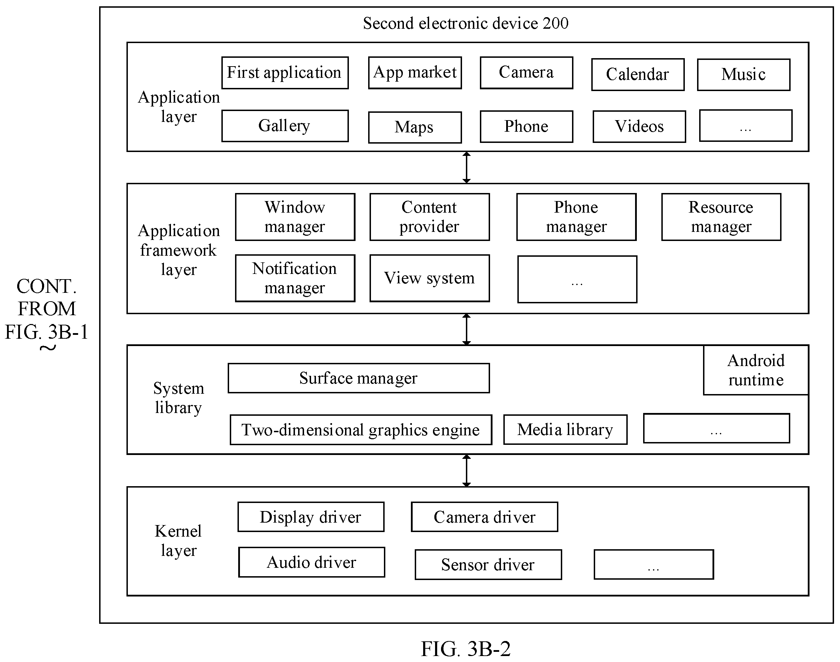

For example, FIG. 3A is a diagram of a structure of the first electronic device 100 or the second electronic device 200.

The first electronic device 100 or the second electronic device 200 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator module 192, a camera 193, a display 194, a subscriber identification module (subscriber identification module, SIM) card interface 195, and the like.

It may be understood that the structure shown in this embodiment of this application does not constitute a specific limitation on the first electronic device 100 or the second electronic device 200. In some other embodiments of this application, the first electronic device 100 or the second electronic device 200 may include more or fewer components than those shown in the figure, or combine some components, or split some components, or have different component arrangements. The components shown in the figure may be implemented by hardware, software, or a combination of software and hardware.

For example, when the first electronic device 100 is a PC, the first electronic device 100 may not include the mobile communication module 150 and the SIM card interface 195.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to connect to a charger to charge the first electronic device 100 or the second electronic device 200, or may be configured to transmit data between the first electronic device 100 or the second electronic device 200 and a peripheral device, or may be configured to connect to a headset for playing an audio through the headset. The interface may be further configured to connect to another electronic device like an AR device.

It may be understood that an interface connection relationship between the modules shown in this embodiment of this application is merely an example for description, and does not constitute a limitation on the structure of the first electronic device 100 or the second electronic device 200. In some other embodiments of this application, the first electronic device 100 or the second electronic device 200 may alternatively use an interface connection manner different from that in the foregoing embodiment, or use a combination of a plurality of interface connection manners.

The charging management module 140 is configured to receive a charging input from a charger. The charger may be a wireless charger, or may be a wired charger. The charging management module 140 may further supply power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. In some other embodiments, the power management module 141 may alternatively be disposed in the processor 110. In some other embodiments, the power management module 141 and the charging management module 140 may alternatively be disposed in a same device.

A wireless communication function of the first electronic device 100 or the second electronic device 200 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first electronic device 100 or the second electronic device 200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the first electronic device 100 or the second electronic device 200 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the first electronic device 100 or the second electronic device 200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the first electronic device 100 or the second electronic device 200, the antenna 1 and the mobile communication module 150 are coupled, and the antenna 2 and the wireless communication module 160 are coupled, so that the first electronic device 100 or the second electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The first electronic device 100 or the second electronic device 200 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), for example, an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the first electronic device 100 or the second electronic device 200 may include one or N displays 194, where N is a positive integer greater than 1.

In an implementation, the first electronic device 100 sends a data query condition and a local data snapshot to the second electronic device 200 in response to an operation of indicating, by a user, to display a first application interface. In this way, the second electronic device 200 determines, based on the data query condition and the local data snapshot, data that is not stored in the first electronic device 100 and that is in data corresponding to the data query condition, and sends the data to the first electronic device 100. Then, the first electronic device 100 may display, on the display 194 based on the obtained data and locally stored data, the first application interface that the user indicates to display.

The indicator 192 may be an indicator light, and may be configured to indicate a charging status and a power change, or may be configured to indicate a message, a missed call, a notification, and the like.

The camera 193 is configured to capture a static image or a video. An optical image of an object is generated through the lens, and is projected onto a photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the first electronic device 100 or the second electronic device 200 may include one or N cameras 193, where N is a positive integer greater than 1.

The external memory interface 120 may be configured to connect to an external storage card, for example, a micro SD card, to extend a storage capability of the first electronic device 100 or the second electronic device 200. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data, and a phone book) created during a process of using the first electronic device 100 or the second electronic device 200, and the like. In addition, the internal memory 121 may include a high-speed random access memory, or may include a nonvolatile memory, for example, at least one disk storage device, a flash memory, or a universal flash storage (universal flash storage, UFS). The processor 110 runs the instructions stored in the internal memory 121 and/or the instructions stored in the memory disposed in the processor, to perform various function applications and data processing of the first electronic device 100 or the second electronic device 200.

Optionally, the internal memory 121 includes a disk and a memory. Because a read/write speed in the memory is much higher than a read/write speed in the disk, a system first caches data that is frequently read and written into the memory, to implement high-speed caching.

In some examples, after determining a data query condition for cross-device data access, the first electronic device 100 writes, into a shared memory based on the data query condition, data selected from the disk, and determines first information of the data. Then, the first electronic device 100 sends a data selecting condition and the first information to the second electronic device 200 through the mobile communication module 150 or the wireless communication module 160, to obtain synchronous data that is not stored in the disk. The first electronic device 100 writes the obtained synchronous data into the shared memory. In this case, a subsequent process of an application or a service may directly read required data from the shared memory. This effectively improves a read/write speed, reduces a quantity of times of reading/writing disk data, and improves cross-device data access efficiency.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110. The first electronic device 100 or the second electronic device 200 may implement an audio function, for example, music playing or recording, through the audio module 170. The audio module 170 may include a speaker, a receiver, a microphone, a headset port, an application processor, and the like.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The touch sensor is also referred to as a "touch control component". The touch sensor may be disposed on the display 194, and the touch sensor and the display 194 form a touchscreen, which is also referred to as a "touch control screen". The touch sensor is configured to detect a touch operation performed on or near the touch sensor. The touch sensor may transfer the detected touch operation to the application processor, to determine a type of a touch event. A visual output related to the touch operation may be provided through the display 194. In some other embodiments, the touch sensor may alternatively be disposed on a surface of the first electronic device 100 or the second electronic device 200, and is at a location different from that of the display 194.

The button 190 includes a power button, a volume button, and the like. The button 190 may be a mechanical button, or may be a touch button. The first electronic device 100 or the second electronic device 200 may receive a button input, and generate a key signal input related to a user setting and function control of the first electronic device 100 or the second electronic device 200.

The motor 191 may generate a vibration prompt. The motor 191 may be configured to provide an incoming call vibration prompt and a touch vibration feedback.

The SIM card interface 195 is configured to connect to a SIM card. The SIM card may be inserted into the SIM card interface 195 or removed from the SIM card interface 195, to implement contact with and separation from the first electronic device 100 or the second electronic device 200. The first electronic device 100 or the second electronic device 200 may support one or N SIM card interfaces, where N is a positive integer greater than 1.

A software system of the first electronic device 100 or the second electronic device 200 may use a layered architecture, an event-driven architecture, a microkernel architecture, a microservice architecture, or a cloud architecture. In embodiments of this application, an Android system with a layered architecture is used as an example to describe a software structure of the first electronic device 100 or the second electronic device 200.

FIG. 3B-1 and FIG. 3B-2 are a block diagram of a software structure of a first electronic device 100 or a second electronic device 200 according to an embodiment of this application.

In a layered architecture, software is divided into several layers, and each layer has a clear role and a clear task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 3B-1 and FIG. 3B-2, the application packages may include applications such as Camera, Gallery, Calendar, Phone, Maps, Navigation, WLAN, Bluetooth, Music, Videos, and Messages.

In some examples, as shown in FIG. 3B-1 and FIG. 3B-2, a first application is installed on the second electronic device 200. The first electronic device 100 may obtain application information of the second electronic device 200 through a communication connection to the second electronic device 200, to determine that the first application is installed on the second electronic device 200. Optionally, the first electronic device 100 may display an application icon of an application in the second electronic device 200 based on the obtained application information. In response to an operation of tapping an application icon of the first application by a user, the first electronic device 100 requests to obtain data of the first application from the second electronic device 200, to implement cross-device access to the data of the first application.

Optionally, the data that is of the first application and that is obtained by the first electronic device 100 through requesting includes data of an interface that the user taps the application icon of the first application to indicate to display, for example, home page data of the first application.

Optionally, the first application may be installed on the first electronic device 100, or the first application is not installed on the first electronic device 100.

The application framework layer provides an application programming interface (application programming interface, API) and a programming framework for an application at the application layer. The application framework layer includes some predefined functions.

As shown in FIG. 3B-1 and FIG. 3B-2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and a browsing bookmark, an address book, and the like.

The view system includes a visual control, for example, a control for displaying a text or a control for displaying a picture. The view system may be configured to construct an application. A display interface may include one or more views. For example, a display interface of a memo application may include a view for displaying a text and a view for displaying a picture.

The phone manager is configured to provide a communication function for the first electronic device 100 or the second electronic device 200, for example, call status management (including answering, hanging up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of graph or scroll bar text, for example, a notification of an application that is run on a background, or may be a notification that appears on the screen in a form of dialog window. For example, text information is displayed in the status bar, an announcement is given, the electronic device vibrates, or an indicator light blinks.

The Android runtime includes a kernel library and a virtual machine. The Android runtime is responsible for scheduling and management of the Android system.

The kernel library includes two parts: a functional function that needs to be invoked in Java language and a kernel library of Android.

The application layer and the application framework layer run on the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is configured to: manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

The kernel layer is a layer between hardware and software. The kernel layer includes at least a display driver, a camera driver, an audio driver, and a sensor driver.

The following describes the data synchronization method provided in embodiments of this application by using an example in which the first electronic device 100 is a first electronic device, the second electronic device 200 is a second electronic device, and the first electronic device 100 accesses data of the second electronic device 200 in a cross-device manner.

In an implementation, a communication connection is established between the first electronic device and the second electronic device, and the first electronic device may access the data of the second electronic device in a cross-device manner through the communication connection, to implement data synchronization between the first electronic device 100 and the second electronic device 200.

Optionally, the communication connection between the first electronic device and the second electronic device is, for example, a multi-screen collaboration connection, to meet a requirement of a user for using a function of the second electronic device via the first electronic device. For example, a multi-screen collaboration application is installed on the first electronic device and the second electronic device, and then, the multi-screen collaboration connection between the first electronic device and the second electronic device may be established through the multi-screen collaboration application. Among the electronic devices that establish the multi-screen collaboration connection, the first electronic device (for example, a receive device) may synchronize application data in the second electronic device (for example, a source device), and display an application interface in the second electronic device based on the obtained application data. The user may use an application in the second electronic device on the first electronic device.

Optionally, after establishing the communication connection to the second electronic device, the first electronic device may obtain application list information of the second electronic device, and display a corresponding application icon based on the application list information. Then, the first electronic device may send an application start request to the second electronic device in response to an operation performed by the user on the application icon. In response to the received application start request, the second electronic device starts a corresponding application in the background, and sends corresponding application data to the first electronic device. In this case, the first electronic device may display an application interface based on the obtained application data. In this way, the application in the second electronic device is started in a projection manner, and running of the second electronic device is not affected. In this way, in a case in which the application in the second electronic device is not installed on the first electronic device, the first electronic device may determine, based on the application list information, that the application is installed on the second electronic device, so that the first electronic device displays the application interface for the user to use.

In the cross-device data access scenario in the foregoing example, the first electronic device needs to obtain the application data in the second electronic device, to display the interface of the application in the second electronic device. To avoid a case in which an excessively large amount of data is synchronized at a single time, after detecting an operation of indicating, by the user, to display the application interface, the first electronic device may request, from the second electronic device, to obtain data used for displaying the to-be-displayed interface, to reduce a data transmission amount.

For example, a mobile phone (for example, the first electronic device) establishes a communication connection to a tablet (for example, the second electronic device), the user uses a memo application (for example, the first application) in the tablet via the mobile phone, and the mobile phone needs to synchronize memo data in the tablet. On an interface 401 shown in FIG. 4(a), in a process in which the mobile phone displays a home page of the memo application in the tablet, the mobile phone detects an operation of tapping a control 41 by the user, and determines that the user indicates to open memo content 3. In this case, the mobile phone may determine that a to-be-displayed interface is an interface of the memo content 3, and may request, from the tablet, to obtain data used for displaying the interface.

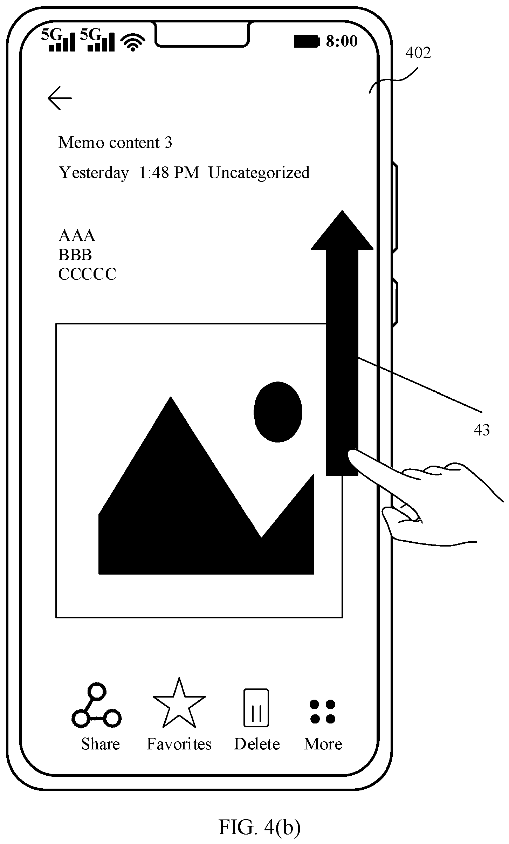

Optionally, in response to the user operation, the mobile phone generates a corresponding data query condition for querying data required for displaying the interface corresponding to the memo content 3, and sends the data query condition to the tablet. In this case, the tablet may determine corresponding data based on the received data query condition, and send the data to the mobile phone. As shown in FIG. 4(b), after receiving the data sent by the tablet, the mobile phone may display an interface 402 corresponding to the memo content 3.

In this way, in a cross-device data access process, data transmitted between the first electronic device and the second electronic device is data used by the first electronic device to display the to-be-displayed interface, and is no longer full data of an application. This effectively reduces a data transmission amount and reduces power consumption of the electronic devices.

Optionally, data corresponding to an interface that a user operation indicates to display may include data used for displaying a to-be-displayed interface and data used for displaying an interface associated with the to-be-displayed interface.

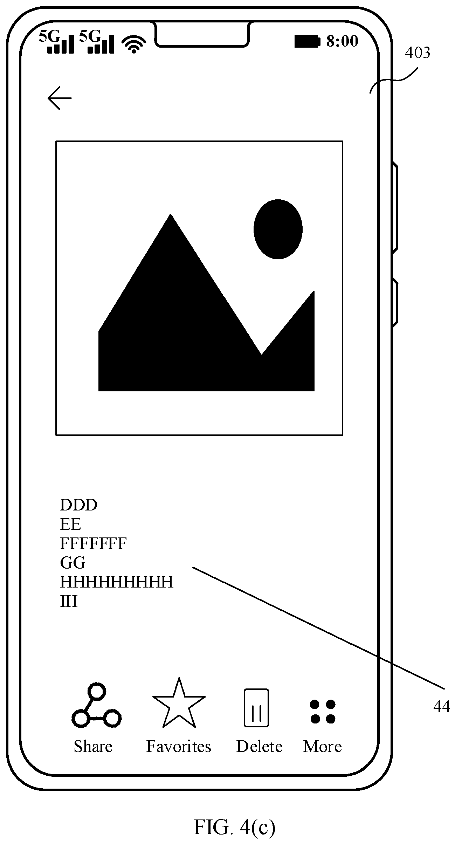

For example, in the scenario shown in FIG. 4(a) to FIG. 4(c), the memo content 3 includes a large amount of content, and the mobile phone may fail to display all the content included in the memo content 3 on one interface. On the interface 402 shown in FIG. 4(b), in response to a sliding operation (namely, a page flipping operation) performed by the user on a display in a direction indicated by an arrow 43, the mobile phone may display an interface 403 shown in FIG. 4(c). As shown by a reference numeral 44, the mobile phone may display remaining content in the memo content 3 on the interface 403.

In this case, in response to the operation of tapping the control 41 on the interface 401 by the user, the mobile phone may obtain data corresponding to all the content included in the memo content 3. Then, the mobile phone may display the interface 402 based on information such as a size of the display and the obtained data sent by the second electronic device. If the mobile phone subsequently detects a page flipping operation of the user on the interface 402, the mobile phone may directly display the interface 403 based on the obtained data.

Alternatively, data segmentation is completed in the application. In response to the operation of tapping the control 41 on the interface 401 by the user, the mobile phone may request, from the tablet, to obtain data used for displaying the interface 402. If the mobile phone subsequently detects a page flipping operation of the user on the interface 402, the mobile phone may further request, from the tablet, to obtain data used for displaying the interface 403.

It should be noted that, for ease of description, in the following, data that is required by an interface and that is determined by the first electronic device in response to a user operation includes all data corresponding to the interface indicated by the user operation. For example, the data includes data for displaying the currently to-be-displayed interface, and may further include data for displaying an interface associated with the currently to-be-displayed interface.

Optionally, if the first electronic device has previously accessed an application that is in the second electronic device and that the user operation indicates to display, the first electronic device may locally store data of the application, and the data does not need to be resynchronized in a current data synchronization process. In this case, the first electronic device may generate a local data snapshot. Then, the first electronic device may send the data query condition and the local data snapshot to the second electronic device. The second electronic device may select, based on the data query condition and the local data snapshot, data that is not stored in the first electronic device and that is in the data corresponding to the to-be-displayed application interface, and synchronize this part of data to the first electronic device. In this way, while data synchronization is implemented, an amount of data transmitted at a single time can be reduced, synchronization efficiency can be improved, and power consumption can be reduced.

For example, as shown in FIG. 4(a), in response to the operation of tapping the control 41 on the interface 401 by the user, the data that is sent by the tablet (namely, the second electronic device) and that is obtained by the mobile phone (namely, the first electronic device) includes only the data used for displaying the interface 402 shown in FIG. 4(b) (that is, content corresponding to the current memo content 3 includes only display content of the interface 402).

Then, partial memo data is newly added in response to an editing operation performed by the user on the memo content 3 in the memo application on the tablet. Then, in response to the operation of tapping the control 41 on the interface 401 by the user, the mobile phone sends, to the tablet, a data request that carries a local data snapshot corresponding to the interface 402. In this case, the tablet may send the newly added memo data in the memo content 3 to the mobile phone based on the obtained local data snapshot, and does not need to repeatedly send existing data in the first electronic device.

In this way, in the cross-device data access process, an amount of data transmitted between the electronic devices is further reduced, and power consumption of the electronic devices is reduced.

In an implementation, in a process of cross-device data access between the first electronic device and the second electronic device, the foregoing cross-device application data access can be implemented, and cross-device service data access and the like can also be implemented, to meet a requirement for data synchronization between the first electronic device and the second electronic device. Optionally, the application data accessed in a cross-device manner includes, for example, a plurality of types of data such as application display data and audio data.

For example, the first electronic device accesses the memo application in the second electronic device in a cross-device manner, and synchronizes interface display data of the memo application, to display an interface of the memo application in the second electronic device. Alternatively, the first electronic device accesses a music application in the second electronic device in a cross-device manner, and synchronizes interface display data and audio data of the music application, to display an interface of the music application in the second electronic device and play music.

For another example, the first electronic device accesses services such as a task manager service and an installation package management service in the second electronic device in a cross-device manner, to synchronize service data between the first electronic device and the second electronic device.

An example in which the mobile phone is used as a receive device, the tablet is used as a source device, and the mobile phone displays an application (for example, a memo application) in the tablet is still used. On an interface 501 shown in FIG. 5(a), in response to an upward sliding operation performed by a user on a bottom of a display in a direction indicated by an arrow 51, the mobile phone determines that the user indicates to display a multi-task interface. On the multi-task interface, widgets corresponding to a plurality of started applications (tasks) are displayed in a cascading arrangement manner, a stacking arrangement manner, a side-by-side arrangement manner, or another arrangement manner. The mobile phone accesses the application in the tablet in a cross-device manner. In this case, widgets displayed on the multi-task interface of the mobile phone may include a widget corresponding to the application in the tablet. Therefore, after the mobile phone starts a task manager service in response to the user operation, the task manager service needs to determine an application that is started in the mobile phone, and also needs to synchronize with the task manager service in the tablet, to determine an application that is in the tablet and that is used by the mobile phone. In addition, the mobile phone may obtain display interface content corresponding to this part of tablet application before the mobile phone detects an operation of indicating, by the user, to display the multi-task interface, to generate a corresponding widget. Then, the mobile phone may display a multi-task interface 502 shown in FIG. 5(b). On the multi-task interface 502, as shown by a reference numeral 52, widgets corresponding to a memo application that is in the tablet and that is used by the mobile phone are displayed.

In this way, in a cross-device data access process, in a process of service data synchronization between the first electronic device and the second electronic device, transmitted data is data used by the first electronic device to display a to-be-displayed interface, and is not full data of a service or an application either. This effectively reduces a data transmission amount and reduces power consumption of the electronic devices.

The following describes the foregoing data synchronization process in detail by using an example in which the first electronic device accesses an application in the second electronic device in a cross-device manner.

It should be noted that, that the first electronic device accesses the application in the second electronic device in a cross-device manner indicates that the first electronic device accesses application data of the application in the second electronic device in a cross-device manner. Optionally, the application may be installed on the first electronic device, or the application is not installed on the first electronic device.

For example, FIG. 6 is a schematic flowchart of a data synchronization method according to an embodiment of this application. As shown in FIG. 6, the method includes the following steps.

S601: A first electronic device sends a data request to a second electronic device in response to a user operation.

The user operation is, for example, an operation performed by a user on a first application, and the first application is an application in the second electronic device. The user operation includes, for example, an operation of starting the first application (for example, an operation performed on an icon of the first application or an operation of starting the first application through a voice), an operation of tapping a preset control on an interface of the first application (for example, an operation for indicating to display a function page of the first application), or a gesture operation on a display of the first electronic device.

In an implementation, a communication connection is established between the first electronic device and the second electronic device, and the first electronic device accesses the first application in the second electronic device in a cross-device manner. After detecting the operation performed by the user on the first application, the first electronic device determines that the first application is an application accessed in a cross-device manner in the second electronic device. Therefore, the first electronic device sends the data request to the second electronic device, to request to obtain data of the first application. To reduce an amount of data transmitted at a single time, the first electronic device may request, from the second electronic device, to obtain data that is in the data of the first application and that is used for displaying an interface that the user operation indicates to display.

Optionally, as shown in FIG. 7, step S601 includes step S601a and step S601b.

S601a: The first electronic device determines a data query condition in response to the user operation.

In an implementation, in response to the operation performed by the user on the first application, the first electronic device may determine the data query condition corresponding to the data required for displaying the interface indicated by the operation, and obtain corresponding data based on the data query condition.

Optionally, a database (for example, a disk or a memory) of the first electronic device may be a plurality of types of databases such as a relational database. Data in the database may be stored in a plurality of manners such as a structured query language (structured query language, SQL). For example, in the relational database, data is stored in a form of row-column correspondence. One data record corresponds to one row of data, and different fields in one data record correspond to different columns of the row of data. Each update of a data record corresponds to one timestamp. Sequences of timestamps between corresponding data records are compared based on water levels. For example, a higher water level indicates a closer timestamp of the data record and data updated at a time point closer to a current time point, and a lower water level indicates a farther timestamp of the data record and historical data updated at a time point farther from the current time point. Correspondingly, the data query condition may include one or more of an application name, row information, column information, water level information, and the like that correspond to to-be-queried data.

For example, the data is stored in the database in a format shown in Table 1. One data record includes an identity (identity, ID) field, a title field, a modification time field, a classification field, and a content field. The electronic device may obtain a corresponding data record based on the ID field. Optionally, the data query condition includes an ID of a data record.

**Table 1**

| | | | | |
|---|---|---|---|---|
| 001 | Title | Modification time | Classification | Content |
| 002 | Title | Modification time | Classification | Content |
| 003 | Title | Modification time | Classification | Content |
| 004 | Title | Modification time | Classification | Content |
| 005 | Title | Modification time | Classification | Content |
| 006 | Title | Modification time | Classification | Content |
| 007 | Title | Modification time | Classification | Content |
| ... | | | | |
| 145 | Title | Modification time | Classification | Content |

For example, the scenario shown in FIG. 4(a) to FIG. 4(c) is used as an example. On the interface 401 shown in FIG. 4(a), in the process in which the mobile phone (the first electronic device) displays the home page of the memo application in the tablet (the second electronic device), the mobile phone detects the operation of tapping the control 41 by the user, and determines that the user indicates to open the memo content 3. In this case, the mobile phone may determine that the to-be-displayed interface is the interface corresponding to the memo content 3, and may further determine a data query condition corresponding to the data required for displaying the interface.

For example, as shown in Table 1, a window selected by using a thick solid line is a data window corresponding to display data for displaying the home page of the memo application. For example, to display the home page of the memo application, corresponding display data needs to be queried based on a data query condition corresponding to the data window, where pieces of data corresponding to 001 to 006 are pieces of data that are in the database and that are respectively used for displaying memo content 1 to memo content 6 that are shown on the interface 401. In this case, as described above, in response to the operation of tapping the control 41 on the interface 401 by the user, the mobile phone may determine that the data query condition includes querying display data corresponding to a data window selected by using double solid lines in Table 1. For example, the data query condition includes row information, column information, water level information, and the like of the data window, and is used to query data of a content field in a data record whose ID is 003.

S601b: The first electronic device sends the data request to the second electronic device, where the data request carries the data query condition.

In an implementation, after determining the data query condition, the first electronic device may send, to the second electronic device, the data request carrying the data query condition. Correspondingly, the second electronic device receives the data request sent by the first electronic device.

According to step S601a and step S601b, in response to the user operation, the first electronic device may request to obtain the corresponding data of the first application from the second electronic device.

S602: The second electronic device determines target data based on the data request, where the target data is used for displaying the interface that the user operation indicates to display.

In an implementation, after receiving the data request, the second electronic device may obtain the data query condition carried in the data request. Then, the second electronic device may determine, based on the data query condition, an application corresponding to data to be queried by the first electronic device, and determine the data of the application. Then, the second electronic device may determine, based on the data query condition, the target data that meets the data query condition and that is in the data of the application.

For example, in the scenario shown in FIG. 4(a) to FIG. 4(c), the target data determined by the second electronic device is the data corresponding to the memo content 3. As shown in Table 1, the target data is data included in the data record whose ID is 003.

S603: The second electronic device sends the target data to the first electronic device.

In an implementation, after determining the target data, the second electronic device sends the target data to the first electronic device. Correspondingly, the first electronic device receives the target data sent by the second electronic device.

S604: The first electronic device displays, based on the target data, the interface that the user operation indicates to display.

In an implementation, after receiving the target data, the first electronic device may display, based on the target data, the interface that the user operation indicates to display.

Optionally, after receiving the target data, the first electronic device may cache the target data into the memory. A data read/write speed in the memory is higher than that in the disk. This improves the data read/write speed and accordingly improves interface display efficiency.

For example, in the scenario shown in FIG. 4(a) to FIG. 4(c), the second electronic device may display, based on the obtained target data, the interface 402 shown in FIG. 4(b).

In this way, the first electronic device performs data synchronization in a cross-device data access process based on an actual requirement. This effectively reduces invalid data synchronization in the data synchronization process, and improves an energy efficiency ratio in the data synchronization process.

In addition, the first electronic device synchronizes data as required, so that power consumption of data synchronization is effectively reduced while data synchronization is ensured, and user experience is improved.

Optionally, as shown in FIG. 6, after step S604, step S605 may be further performed to update locally stored data.

S605: The first electronic device updates the locally stored data.

In an implementation, after receiving the target data, the first electronic device may store the received target data. In the process of accessing the application in the second electronic device in a cross-device manner, the first electronic device may obtain the data (namely, the target data) of the first application for a plurality of times. In this case, after receiving the target data, the first electronic device may update locally stored data of the first application based on the target data.

For example, as shown in Table 1, the locally stored data in the first electronic device includes the display data corresponding to the data window selected by using the thick solid line, and the target data that is sent by the second electronic device and that is received by the first electronic device includes the display data (namely, the target data) corresponding to the data window selected by using the double solid lines. In this case, the first electronic device may update the locally stored data of the first application based on the obtained target data. For example, the first electronic device updates, based on the obtained target data, a data record corresponding to an original ID 003.

In the process of accessing the application in the second electronic device in a cross-device manner, the first electronic device may store corresponding application data. In this case, optionally, in the data synchronization process, the first electronic device may alternatively choose not to synchronize stored partial application data, to further reduce a data transmission amount.

For example, FIG. 8 is a schematic flowchart of another data synchronization method according to an embodiment of this application. As shown in FIG. 8, the method includes the following steps.

S801: A first electronic device determines a data query condition in response to a user operation.

Optionally, for content of step S801, refer to related content described in step S601a. Details are not described herein again.

S802: The first electronic device determines first information of data that meets the data query condition and that is in locally stored data.

In an implementation, before detecting the user operation this time, the first electronic device may have obtained corresponding partial application data. In this case, the partial data is also stored in a local disk. After determining the data query condition, the first electronic device may first determine the first information of the data that meets the data query condition and that is in the locally stored data. In this way, subsequently, in a process of determining data that needs to be synchronized, the second electronic device may determine not to synchronize repeated data in this part of data, to reduce an amount of synchronized data. Optionally, the first information includes, for example, row information, column information, water level information, and the like of the data that meets the data query condition and that is in the data locally stored in the first electronic device.

For example, on the interface 401 shown in FIG. 4(a), the mobile phone (namely, the first electronic device) has displayed the home page of the memo application, that is, the locally stored data includes at least data of the home page of the memo application. As described in the example in Table 1 in step S601a, the display data corresponding to the data window selected by using the thick solid line is locally stored. In response to the operation of tapping, by the user, the control 41 shown on the interface 401, the mobile phone determines that the interface that the user indicates to display is the interface corresponding to the memo content 3. As shown in Table 1, the data query condition is information about the data window selected by using the double solid lines. In this case, it may be determined that a local data snapshot is first information of a data window in an intersection set of the two data windows.

For example, as shown in FIG. 9A, data that is of a first application and that is locally stored in the first electronic device is data A, and data of the first application in the second electronic device is data B. It may be understood that the data B is latest full data of the first application, and the data B includes the data A. Optionally, in some examples, partial data in the data A is first application data in the data B before partial data in the data B is updated. As shown in FIG. 9A, in response to a user operation, the first electronic device determines that data required for completing an interface that the user operation indicates to display includes partial data of the data A stored in the first electronic device and partial data that is not stored in the first electronic device (the partial data is stored in the second electronic device). That is, the data query condition is used to query data C and data D.

Optionally, as shown in (a) in FIG. 9B, the data A of the first application is stored in a disk of the first electronic device. In addition, in response to the user operation, a process of the first application starts a data management process of the first electronic device, and sends the data query condition to the data management process. Then, the data management process selects, from the disk, the data C that meets the data query condition, and writes the data C into a shared memory. In this process, the data management process in the first electronic device may determine first information of the data C.

S803: The first electronic device sends a data request to the second electronic device, where the data request carries the data query condition and the first information.

In an implementation, after determining the data query condition and the first information of the data that meets the data query condition and that is in the locally stored data, the first electronic device may send, to the second electronic device, the data request carrying the data query condition and the first information. Correspondingly, the second electronic device receives the data request sent by the first electronic device.

S804: The second electronic device determines, based on the data query condition and the first information, differential data that meets the data query condition.

In an implementation, after obtaining the data query condition and the first information, the second electronic device determines the first application corresponding to the data query condition, and obtains the data of the first application. Then, the second electronic device queries the data of the first application for data that meets the data query condition. Finally, the second electronic device determines the differential data in the found data based on the first information.

For example, the second electronic device determines display data (the differential data) that is not stored in the first electronic device and that is in display data (the data that meets the data query condition) of the to-be-displayed interface.

Optionally, the second electronic device compares the first information with information about the found data, and packs determined valid data into the differential data.

For example, the second electronic device determines, based on the first information, a specific row of data that is in the data found based on the data query condition and that is not stored in the first electronic device, and the second electronic device may determine the row of data as the differential data (namely, the valid data). As shown in Table 1, the second electronic device determines that the data found based on the data query condition includes a row of data whose ID is 003 (that is, includes the data record whose ID is 003), and may determine, based on the first information, that the row of data is not stored in the first electronic device. In this case, the first electronic device may determine the row of data as the differential data.

For another example, the second electronic device determines, based on the first information, a specific row of data that is stored in the first electronic device and that is in the data found based on the data query condition. However, a water level of the row of data is lower than a water level of the row of data stored in the second electronic device. In this case, the second electronic device may determine the row of data as the differential data. As shown in Table 1, the second electronic device determines that the data found based on the data query condition includes the row of data whose ID is 003, and may determine, based on the first information, that the row of data is stored in the first electronic device. However, the second electronic device determines, based on the first information, that a water level of the row of data whose ID is 003 and that is stored in the first electronic device is lower than a water level of the row of data whose ID is 003 and that is stored in the second electronic device. That is, the row of data whose ID is 003 and that is stored in the second electronic device is newer than the row of data whose ID is 003 and that is stored in the first electronic device. Therefore, resynchronization needs to be performed this time. In this case, the second electronic device may determine the row of data whose ID is 003 as the differential data. For example, in the scenario shown in FIG. 4(a) to FIG. 4(c), memo data that corresponds to the memo content 3 and that is stored in the first electronic device includes display data used for displaying the interface 402, and memo data that corresponds to the memo content 3 and that is stored in the second electronic device includes display data used for displaying the interface 402 and the interface 403 (that is, includes memo data corresponding to the newly added reference numeral 44). In this case, a water level of the memo data that corresponds to the memo content 3 and that is stored in the second electronic device is higher than a water level of the memo data that corresponds to the memo content 3 and that is stored in the first electronic device, and the memo data that corresponds to the memo content 3 and that is stored in the second electronic device is updated memo data.

For another example, the second electronic device determines, based on the first information, a specific row of data that is stored in the first electronic device and that is in the data found based on the data query condition. In addition, a water level of the row of data is the same as that in the second electronic device, but a column of the row of data is different from that in the second electronic device. In this case, the second electronic device may determine data of a newly added column in the row of data as valid data. As shown in Table 1, the second electronic device determines that the data found based on the data query condition includes the row of data whose ID is 003, and may determine, based on the first information, that the row of data with a same water level is stored in the first electronic device. However, the second electronic device determines, based on the first information, that column data that corresponds to a "Content" field and that is in the row of data whose ID is 003 is not stored in the first electronic device. In this case, the second electronic device may determine, as valid data, the column data that corresponds to the "Content" field and that is in the row of data whose ID is 003.

Optionally, the second electronic device may determine, as invalid data, data that is in another scenario and that is not included in the foregoing example scenario, and the invalid data does not need to be packed into the differential data. Optionally, the differential data may be empty, that is, synchronous data does not need to be transmitted between the first electronic device and the second electronic device this time. Subsequently, the first electronic device may determine, based on the obtained differential data, data that meets the data query condition and that is in the locally stored data, and display the to-be-displayed application interface.

For example, as described in the example in Table 1 in step S601a, the display data corresponding to the data window selected by using the thick solid line is locally stored in the first electronic device, and the data query condition is the information about the data window selected by using the double solid lines. As described in step S802, the first information is the information about the data window in the intersection set between the data window selected by using the thick solid line and the data window selected by using the double solid lines. In this case, the second electronic device may determine that the differential data is content data corresponding to a "Content" data window in the data window selected by using the double solid lines. That is, the differential data is determined in a sliding window manner.

For example, as shown in (a) in FIG. 9B, the data management process in the first electronic device determines that data that meets the data query condition and that is in the data A is the data C. In this case, the data management process in the first electronic device sends the data query condition and the first information of the data C to the second electronic device. The data management process in the second electronic device may determine, based on the data query condition, that data corresponding to the application that the user operation indicates to access in a cross-device manner is the data B in the disk, and determine that the data that meets the data query condition includes the data C and the data D that are in the data B. Optionally, the data management process in the second electronic device caches the data C and the data D into a shared memory. Then, as shown in (b) in FIG. 9B, the data management process in the second electronic device may determine, based on the first information of the data C, that the differential data is the data D, where the data D is data to be synchronized by the first electronic device.

For ease of description, in a scenario shown in FIG. 9B, a data synchronization process in a cross-device data access process is described by using an example in which the data C stored in the first electronic device is latest data and data found by the second electronic device is divided into the data C and the data D. It may be understood that, in an actual cross-device data access process, the data found by the second electronic device based on the data query condition may include partial data in the first electronic device, or may include updated data corresponding to partial data in the first electronic device (for example, the data B includes updated data of the data C in the first electronic device).

S805: The second electronic device sends the differential data to the first electronic device.

In an implementation, after determining the differential data, the second electronic device sends the differential data to the first electronic device. Correspondingly, the first electronic device receives the differential data sent by the second electronic device.

S806: The first electronic device displays, based on the differential data and the locally stored data, the interface that the user operation indicates to display.

In an implementation, after receiving the differential data, the first electronic device determines, based on the differential data and the locally stored data of the first application, display data of a to-be-displayed interface of the first application, and sends the display data to the first application. After obtaining the display data, the first application may display the corresponding first application interface.

For example, in the scenario shown in FIG. 4(a) to FIG. 4(c), after obtaining the differential data sent by the tablet, the mobile phone may synchronize the differential data to the shared memory, and record offset window information corresponding to the differential data. Then, the memo application may determine required display data in the shared memory based on the offset window information, to display the interface 402 of the memo content 3 shown in FIG. 4(b).

For another example, as shown in (c) in FIG. 9B, after the data management process in the first electronic device obtains the differential data (for example, the data D) sent by the second electronic device, the data management process writes the data D into the shared memory of the first electronic device, and determines offset window information corresponding to the data D. Then, the data management process sends a data synchronization complete signal to the process in the first application, where the data synchronization complete signal may carry shared memory information and the offset window information. The process in the first application may read the data C and the data D from the shared memory based on the offset window information. Further, the process in the first application may display, based on the data C and the data D, the interface that the user operation indicates to display.

In this way, the first electronic device performs data synchronization as required in a cross-device data access process based on an actual requirement. This effectively reduces invalid data synchronization in the data synchronization process, and improves an energy efficiency ratio in the data synchronization process.

In addition, the first electronic device synchronizes data as required, so that power consumption of data synchronization is effectively reduced while data synchronization is ensured, and user experience is improved.

In addition, the first electronic device performs data synchronization in the shared memory, so that a quantity of data read and write times in the disk is reduced, efficiency is improved, and a performance loss of the first electronic device is reduced.

S807: The first electronic device updates local data based on the differential data.

In an implementation, after receiving the differential data, the first electronic device may update the locally stored data of the first application based on the differential data.

For example, as shown in Table 1, the locally stored data in the first electronic device includes the display data corresponding to the data window selected by using the thick solid line, and the differential data that is sent by the second electronic device and that is received by the first electronic device includes the display data corresponding to the "Content" data window selected by using the double solid lines. In this case, the first electronic device may update the locally stored display data of the first application based on the obtained display data corresponding to the "Content" data window. For example, the first electronic device adds new display data corresponding to the "Content" data window.

Optionally, that the first electronic device updates the local data includes adding, based on the differential data, display data that is not locally stored, and may further include updating old display data that is stored in the first electronic device. As shown in Table 1, the differential data further includes data corresponding to a "Classification" data window selected by using the double solid lines. In this case, after obtaining the differential data, the first electronic device may update, based on the display data corresponding to the "Classification" data window selected by using the double solid lines, locally stored display data corresponding to an original "Classification" data window.

For another example, as shown in (c) in FIG. 9B, after writing obtained differential data D sent by the second electronic device into the shared memory, the data management process in the first electronic device may further update, based on the differential data D, the data A stored in the local disk. For example, the data management process in the first electronic device updates the data A to data A'.

An execution sequence between step S806 and step S807 is not limited in this embodiment of this application. After obtaining the differential data, the first electronic device may first display the interface based on the differential data, and then update the locally stored data (that is, step S806 is first performed, and then, step S807 is performed). Alternatively, after obtaining the differential data, the first electronic device may first update the locally stored data based on the differential data, and then display the interface (that is, step S807 is first performed, and then, step S806 is performed). Alternatively, after obtaining the differential data, the first electronic device updates the locally stored data in a process of displaying the interface based on the differential data (that is, step S806 and step S807 are synchronously performed).

Optionally, a life cycle of the shared memory in the first electronic device corresponds to a life cycle of an application or a service. After the first electronic device ends running of a process of the service or the application, the life cycle of the shared memory ends accordingly. Therefore, the first electronic device synchronizes the data in the disk to avoid loss of the synchronous data, so that when the application or the service is started next time, corresponding data can be read from the disk.

Optionally, as shown in (a) in FIG. 9B, in a start phase (for example, after an application or a service is started) of the life cycle of the shared memory, the data management process in the first electronic device first determines, from the disk, data that meets the data query condition, and then writes the data into the shared memory, to complete a subsequent data synchronization process.

Subsequently, in response to a user operation, the data management process in the first electronic device may first directly determine whether the data in the shared memory meets the data query condition. If data that already meets the data query condition exists, data reading may be directly completed. This improves interface display execution efficiency. Alternatively, the data management process determines that data that meets the data query condition exists in both the disk and the shared memory, and may read, from the disk, data that exists in the disk but does not exist in the shared memory, and write the data into the shared memory. Then, the data management process completes cross-device data synchronization based on the data in the shared memory. In this way, an amount of data read from the disk is reduced, and efficiency is improved.

In some scenarios, in step S802, after finding, from the disk, the data that meets the data query condition, the first electronic device may alternatively directly determine second information of this part of data, and send the second information and the data query condition to the second electronic device. Then, the first electronic device may also obtain the differential data determined by the second electronic device based on the second information and the data query condition. Then, the first electronic device updates the data in the disk based on the differential data, to complete a task indicated by the user operation.

In this way, the first electronic device can also reduce an amount of data transmitted between the first electronic device and the second electronic device in a cross-device data access process, and improve an energy efficiency ratio in a data synchronization process.

Optionally, in the process of cross-device data access between the first electronic device and the second electronic device, for a process of data synchronization of another application or service, refer to the example application data synchronization process in the foregoing embodiments. Details are not described again in this embodiment of this application.

Optionally, FIG. 10 is a schematic flowchart of a data synchronization method according to an embodiment of this application. As shown in FIG. 10, the method includes the following steps:
S1001: A first electronic device sends a first data request to a second electronic device in response to a first operation of a user, where the first data request is used to request data required for a first interface that the first operation indicates to display.

The first interface corresponds to a first application in the second electronic device. Optionally, the first application includes an application (application, APP) or a service (for example, a task manager service or an installation package management service) in the second electronic device. In response to the first operation, the first electronic device and the second electronic device may synchronize application data or service data required for the first interface that the first operation indicates to display.

The first interface is an interface to be displayed by the first electronic device in response to a user operation. First data includes data of the to-be-displayed interface indicated by the user operation and data of an interface associated with the to-be-displayed interface, or first data includes data of the to-be-displayed interface indicated by the user operation.

For example, in the scenario shown in FIG. 4(a) to FIG. 4(c), the first interface is the interface 402 shown in FIG. 4(b). The first data includes all data corresponding to the memo application 3, for example, includes data used for displaying the interface 402, and data used for displaying the interface 403 shown in FIG. 4(c). Alternatively, the first data includes data used for displaying the interface 402.

In an implementation, the first electronic device determines a data query condition in response to the first operation, where the data query condition is used to query data required for displaying the first interface. Then, the first electronic device sends, to the second electronic device, the first data request that carries the data query condition, so that the second electronic device can determine, based on the data query condition, the data required for displaying the first interface.

Optionally, after determining the data query condition, the first electronic device obtains third data that meets the data query condition and that is in local data, and determines first information of the third data. The first data request further carries the first information, and the first information includes one or more of the following information of the third data: row information, column information, and water level information.

In this way, after obtaining the first data request, the second electronic device may determine partial data that is required for displaying the first interface and that is stored in the first electronic device. In this case, the second electronic device may choose not to synchronize the partial data, to further reduce an amount of data transmitted in a subsequent application data synchronization process.

Optionally, the first electronic device queries the third data that meets the data query condition and that is in the local data stored in a first storage space. Then, the first electronic device determines the first information of the third data after caching the third data into a second storage space. The first storage space is, for example, a disk, and the second storage space is, for example, a shared memory. Compared with that in the disk, a data read/write speed in the shared memory is higher. After the data used for displaying the first interface is cached into the shared memory, an application process may directly obtain the data of the first interface from the shared memory. This improves the data read/write speed and accordingly improves interface display efficiency.

For example, as shown in (a) in FIG. 9B, the data A of the first application is stored in a disk (namely, the first storage space) of the first electronic device. The first electronic device selects, from the disk, the data C that meets the data query condition, and writes the data C into a shared memory (namely, the second storage space).

S 1002: The second electronic device determines first data based on the first data request.

In an implementation, after receiving the first data request, the second electronic device may determine that the data that the first data request is used to request is data of the first application.

Optionally, the first data request carries the data query condition, and the second electronic device may determine, based on the data query condition, data that meets the data query condition and that is in the data of the first application, and may further determine that this part of data is the first data. The first data is partial data in the first application. In this way, subsequently, the second electronic device may send the first data to the first electronic device, so that a data transmission amount can be effectively reduced.

Optionally, the first data request carries the data query condition and first information, where the first information is information about the third data, determined by the first electronic device, that meets the data query condition and that is in the first electronic device. In this case, after determining fourth data that locally meets the data query condition, the second electronic device may determine, based on the first information, the first data that needs to be synchronized and that is in the fourth data. In this way, the second electronic device only needs to send, to the first electronic device, data that is not stored in the first electronic device and that is used for displaying the first interface, to further reduce a data transmission amount.

For example, that the second electronic device determines, based on the first information, the first data that needs to be synchronized and that is in the fourth data includes: The second electronic device determines, based on the first information, that the fourth data includes a first row of data that does not exist in the third data, and determines that the first row of data is the first data; and/or the second electronic device determines, based on the first information, a second row of data whose water level is higher than that of the third data and that is in the fourth data, and determines that the second row of data is the first data; and/or the second electronic device determines a first column of data based on the first information, where the first column of data is column data that is not included in the third data and that is in third rows of data with a same water level in the fourth data and the third data, and determines that the first column of data is the first data.

For example, as shown in Table 1, the second electronic device determines that the data found based on the data query condition includes a row of data whose ID is 003 (that is, includes the data record whose ID is 003), and may determine, based on the first information, that the row of data is not stored in the first electronic device. In this case, the first electronic device may determine the row of data as the first data.

S1003: The second electronic device sends the first data to the first electronic device.

Optionally, after determining the first data, the second electronic device sends the first data to the first electronic device. Correspondingly, the first electronic device receives the first data sent by the second electronic device.

S1004: The first electronic device displays the first interface in response to the first data.

In an implementation, after receiving the first data, the first electronic device may display the first interface based on the first data.

For example, in the scenario shown in FIG. 4(a) to FIG. 4(c), after receiving the first data corresponding to the memo content 3 sent by the user, the first electronic device may display, based on the first data, the interface 402 (namely, the first interface) shown in FIG. 4(b).

Optionally, the first electronic device updates the third data in the second storage space based on the received first data. Then, the first electronic device may display the first interface based on updated data in the second storage space.

For example, after receiving the first data, the first electronic device updates, based on the first data, data that corresponds to the first interface and that is stored in the shared memory. Then, the first electronic device may display the first interface based on updated data in the shared memory.

Optionally, after receiving the first data, the first electronic device may further update local data based on the first data.

For example, after receiving the first data, the first electronic device updates, based on the first data, data that is of the first application and that is stored in the disk. In this way, subsequently, in response to an operation of indicating, by the user, to display an interface of the first application, the first electronic device may obtain updated data of the first application from the disk.

S1005: The first electronic device sends a second data request to the second electronic device in response to a second operation of the user, where the second data request is used to request data required for a second interface that the second operation indicates to display.

The second interface also corresponds to the first application. In other words, after displaying the first interface, the first electronic device further determines, in response to the user operation, that the user indicates to display another interface, for example, the second interface, of the first application. In this case, the first electronic device needs to request, from the second electronic device again, to obtain data required for displaying the second interface.

S1006: The second electronic device determines second data based on the second data request.

In an implementation, after receiving the second data request, the second electronic device may determine that the data that the second data request is used to request is data of the first application. The second data is different from the first data.

Optionally, the second data request carries a data query condition used to query data corresponding to the second interface. After receiving the second data request, the second electronic device may determine, based on the data query condition, data that meets the data query condition and that is in the data of the first application, and may further determine that this part of data is the second data.

Optionally, the second data request carries the data query condition used to query the data corresponding to the second interface and carries second information of data that meets the data query condition and that is in the first electronic device. After receiving the second data request, the second electronic device may determine partial data of the first application based on the data query condition, and then determine, based on the second information, the second data that is not stored in the first electronic device and that is in the partial data of the first application.

S 1007: The second electronic device sends the second data to the first electronic device.

Optionally, after determining the second data, the second electronic device sends the second data to the first electronic device. Correspondingly, the first electronic device receives the second data sent by the second electronic device.

S1008: The first electronic device displays the second interface in response to the second data.

In an implementation, after receiving the second data, the first electronic device may display the second interface based on the second data.

Optionally, the first electronic device updates, based on the second data, the locally stored data of the first application.

For example, in the scenario shown in FIG. 4(a) to FIG. 4(c), in a process in which the first electronic device displays the interface 402 shown in FIG. 4(b), in response to a user operation, the first electronic device returns to display the home page of the memo application, for example, displays the interface 401 shown in FIG. 4(a). Then, the first electronic device detects the second operation of tapping a control 45 by the user, and may send the second data request to the second electronic device, where the second data request is used to request to obtain data required for displaying an interface corresponding to memo content 5. The second electronic device sends the data to the first electronic device in response to the second data request, so that the first electronic device can display the interface corresponding to the memo content 5.

In this way, in a cross-device data access process, data transmitted between the first electronic device and the second electronic device is data used by the first electronic device to display the to-be-displayed interface, and is no longer full data of an application. This effectively reduces a data transmission amount and reduces power consumption of the electronic devices.

In some solutions, a plurality of embodiments of this application may be combined, and a solution obtained after the plurality of embodiments are combined is implemented. Optionally, some operations in procedures of the method embodiments are randomly combined, and/or a sequence of some operations is randomly changed. In addition, an execution sequence between steps of each process is merely an example, and does not constitute a limitation on the execution sequence between the steps. The steps may alternatively be performed in another execution sequence. It is not intended to indicate that the execution sequence is the only sequence in which these operations can be performed. A person of ordinary skill in the art may learn various manners of permutating the operations described in this specification. In addition, it should be noted that process details related to an embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

The data synchronization method provided in embodiments of this application is described above in detail with reference to FIG. 4(a) to FIG. 4(c) to FIG. 10. The following describes in detail electronic devices provided in embodiments of this application with reference to FIG. 11 and FIG. 12.

In a possible design, FIG. 11 is a diagram of a structure of a first electronic device according to an embodiment of this application. As shown in FIG. 11, a first electronic device 1100 may include a transceiver unit 1101, a processing unit 1102, and a display unit 1103. The first electronic device 1100 may be configured to implement functions of the first electronic device in the foregoing method embodiments.

Optionally, the transceiver unit 1101 is configured to support the first electronic device 1100 in performing S601 and S603 in FIG. 6; and/or configured to support the first electronic device 1100 in performing S601b in FIG. 7; and/or configured to support the first electronic device 1100 in performing S803 and S805 in FIG. 8; and/or configured to support the first electronic device 1100 in performing S1001, S1003, S1005, and S1007 in FIG. 10.

Optionally, the processing unit 1102 is configured to support the first electronic device 1100 in performing S605 in FIG. 6; and/or configured to support the first electronic device 1100 in performing S601a in FIG. 7; and/or configured to support the first electronic device 1100 in performing S801, S802, and S807 in FIG. 8.

Optionally, the display unit 1103 is configured to support the first electronic device 1100 in displaying interface content; and/or configured to support the first electronic device 1100 in performing S604 in FIG. 6; and/or configured to support the first electronic device 1100 in performing S806 in FIG. 8; and/or configured to support the first electronic device 1100 in performing S1004 and S1008 in FIG. 10.

The transceiver unit may include a receiving unit and a sending unit, may be implemented by a transceiver or a transceiver-related circuit component, and may be a transceiver or a transceiver module. Operations and/or functions of the units in the first electronic device 1100 are separately used to implement corresponding procedures of the data synchronization method in the foregoing method embodiments. All related content of the steps in the foregoing method embodiments may be cited in function descriptions of corresponding functional units. For brevity, details are not described herein again.

Optionally, the first electronic device 1100 shown in FIG. 11 may further include a storage unit (not shown in FIG. 11), and the storage unit stores a program or instructions. When the transceiver unit 1101, the processing unit 1102, and the display unit 1103 execute the program or the instructions, the first electronic device 1100 shown in FIG. 11 may perform the data synchronization method in the foregoing method embodiments.

For technical effect of the first electronic device 1100 shown in FIG. 11, refer to technical effect of the data synchronization method in the foregoing method embodiments. Details are not described herein again.

In addition to a form of the first electronic device 1100, the technical solutions provided in this application may alternatively be a functional unit or a chip in the first electronic device, or an apparatus that matches the first electronic device for use.

In a possible design, FIG. 12 is a diagram of a structure of a second electronic device according to an embodiment of this application. As shown in FIG. 12, a second electronic device 1200 may include a transceiver unit 1201 and a processing unit 1202. The second electronic device 1200 may be configured to implement functions of the second electronic device in the foregoing method embodiments.

Optionally, the transceiver unit 1201 is configured to support the second electronic device 1200 in performing S601 and S603 in FIG. 6; and/or configured to support the second electronic device 1200 in performing S601b in FIG. 7; and/or configured to support the second electronic device 1200 in performing S803 and S805 in FIG. 8; and/or configured to support the second electronic device 1200 in performing S1001, S1003, S1005, and S1007 in FIG. 10.

Optionally, the processing unit 1202 is configured to support the second electronic device 1200 in performing S602 in FIG. 6; and/or configured to support the second electronic device 1200 in performing S804 in FIG. 8; and/or configured to support the second electronic device 1200 in performing S1002 and S1006 in FIG. 10.

The transceiver unit may include a receiving unit and a sending unit, may be implemented by a transceiver or a transceiver-related circuit component, and may be a transceiver or a transceiver module. Operations and/or functions of the units in the second electronic device 1200 are separately used to implement corresponding procedures of the data synchronization method in the foregoing method embodiments. All related content of the steps in the foregoing method embodiments may be cited in function descriptions of corresponding functional units. For brevity, details are not described herein again.

Optionally, the second electronic device 1200 shown in FIG. 12 may further include a storage unit (not shown in FIG. 12), and the storage unit stores a program or instructions. When the transceiver unit 1201 and the processing unit 1202 execute the program or the instructions, the second electronic device 1200 shown in FIG. 12 may perform the data synchronization method in the foregoing method embodiments.

For technical effect of the second electronic device 1200 shown in FIG. 12, refer to technical effect of the data synchronization method in the foregoing method embodiments. Details are not described herein again.

In addition to a form of the second electronic device 1200, the technical solutions provided in this application may alternatively be a functional unit or a chip in the second electronic device, or an apparatus that matches the second electronic device for use.

An embodiment of this application further provides a chip system. The chip system includes a processor, the processor is coupled to a memory, and the memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the data synchronization method in the foregoing embodiments.

An embodiment of this application further provides a computer program product. When the computer program product runs on a computer, the computer is enabled to perform the foregoing related steps, to implement the data synchronization method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the data synchronization method in the foregoing method embodiments.

The apparatus, the computer-readable storage medium, the computer program product, or the chip provided in embodiments of this application is configured to perform the corresponding method provided above. Therefore, for beneficial effect that can be achieved by the apparatus, the computer-readable storage medium, the computer program product, or the chip, refer to beneficial effect in the corresponding method provided above. Details are not described herein again.

Methods or algorithm steps described with reference to the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well known in the art. For example, a storage medium is coupled to the processor, so that the processor can read information from the storage medium and can write information into the storage medium. Certainly, the storage medium may alternatively be a component of the processor. The processor and the storage medium may be located in an application-specific integrated circuit (application-specific integrated circuit, ASIC).

The descriptions in the foregoing implementations allow a person skilled in the art to clearly understand that, for a purpose of convenient and brief description, division of the foregoing functional modules is merely used as an example for illustration. In actual application, the foregoing functions can be allocated to different modules and implemented based on a requirement, that is, an inner structure of an apparatus is divided into different functional modules to implement all or some of the functions described above. For a detailed working process of the foregoing system, apparatus, and unit, refer to a corresponding process in the foregoing method embodiment. Details are not described herein again.

In several embodiments provided in this application, it should be understood that the disclosed methods may be implemented in other manners. The foregoing described apparatus embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this annlication but are not intended to limit the protection scope of this application. Therefore, the protection scope of this application shall be subject to the protection scope of the claims.

## Claims

1. A data synchronization system, wherein the system comprises a first electronic device (100) and a second electronic device (200), wherein
the first electronic device is configured to send a first data request to the second electronic device in response to a first operation of a user, wherein the first data request is used to request data required for a first interface that the first operation indicates to display, and the first interface corresponds to a first application in the second electronic device;
the second electronic device is configured to send first data to the first electronic device in response to the first data request;
the first electronic device is further configured to display the first interface in response to the received first data;
the first electronic device is further configured to send a second data request to the second electronic device in response to a second operation of the user, wherein the second data request is used to request data required for a second interface that the second operation indicates to display, and the second interface corresponds to the first application;
the second electronic device is configured to send second data to the first electronic device in response to the second data request, wherein the second data is different from the first data; and
the first electronic device is further configured to display the second interface in response to the received second data, wherein
the first electronic device is configured to determine a data query condition in response to the first operation, wherein the data query condition is used to query the data required for displaying the first interface, and the data request carries the data query condition.

2. The system according to claim 1, wherein
the first electronic device is further configured to: obtain third data that meets the data query condition and that is in local data, and determine first information of the third data, wherein the first data request further carries the first information, and the first information comprises one or more of the following information of the third data: row information, column information, or water level information.

3. The system according to claim 2, wherein
the second electronic device is configured to determine fourth data that meets the data query condition; and
the second electronic device is configured to determine, based on the first information, the first data that needs to be synchronized and that is in the fourth data, wherein the first data is different from the third data, or partial data in the first data corresponds to updated third data.

4. A data synchronization method, wherein the method comprises:
sending (S1001), by a first electronic device, a first data request to a second electronic device in response to a first operation of a user, wherein the first data request is used to request data required for a first interface that the first operation indicates to display, and the first interface corresponds to a first application in the second electronic device;
receiving (S 1003), by the first electronic device, first data sent by the second electronic device, wherein the first data is data determined by the second electronic device in response to the first data request;
displaying (S 1004), by the first electronic device, the first interface in response to the received first data;
sending (S 1005), by the first electronic device, a second data request to the second electronic device in response to a second operation of the user, wherein the second data request is used to request data required for a second interface that the second operation indicates to display, and the second interface corresponds to the first application;
receiving (S1007), by the first electronic device, second data sent by the second electronic device, wherein the second data is data determined by the second electronic device in response to the second data request, and the second data is different from the first data; and
displaying (S1008), by the first electronic device, the second interface in response to the received second data, wherein the sending, by a first electronic device, a first data request to a second electronic device in response to a first operation of a user comprises:
determining, by the first electronic device, a data query condition in response to the first operation, wherein the data query condition is used to query the data required for displaying the first interface; and
sending, by the first electronic device, the first data request to the second electronic device, wherein the first data request carries the data query condition.

5. The method according to claim 4, wherein the method further comprises:
obtaining, by the first electronic device, third data that meets the data query condition and that is in local data, and determining first information of the third data, wherein the first data request further carries the first information, and the first information comprises one or more of the following information of the third data: row information, column information, and water level information.

6. The method according to claim 5, wherein the obtaining, by the first electronic device, third data that meets the data query condition and that is in local data, and determining first information of the third data comprises:
querying, by the first electronic device, the third data that meets the data query condition and that is in the local data stored in a first storage space; and
determining, by the first electronic device, the first information of the third data after caching the third data into a second storage space.

7. The method according to claim 6, wherein the displaying, by the first electronic device, the first interface in response to the received first data comprises:
updating, by the first electronic device, the third data in the second storage space based on the received first data; and
displaying, by the first electronic device, the first interface based on updated data in the second storage space.

8. The method according to any one of claims 4 to 7, wherein the method further comprises:
updating, by the first electronic device, the local data based on the first data.

9. A data synchronization method, wherein the method comprises:
receiving (S1001), by a second electronic device, a first data request sent by a first electronic device, wherein the first data request is a request that is determined by the first electronic device in response to a first operation of a user and that is used to obtain data required for a first interface that the first operation indicates to display, and the first interface corresponds to a first application in the second electronic device;
determining (S 1002), by the second electronic device, first data based on the first data request;
sending (S1003), by the second electronic device, the first data to the first electronic device, wherein the first data is used by the first electronic device to display the first interface;
receiving (S1005), by the second electronic device, a second data request sent by the first electronic device, wherein the second data request is a request that is determined by the first electronic device in response to a second operation of the user and that is used to obtain data required for a second interface that the second operation indicates to display, and the second interface corresponds to the first application;
determining (S 1006), by the second electronic device, second data based on the second data request, wherein the second data is different from the first data; and
sending (S 1007), by the second electronic device, the second data to the first electronic device, wherein the second data is used by the first electronic device to display the second interface.

10. The method according to claim 9, wherein the determining, by the second electronic device, first data based on the first data request comprises:
obtaining, by the second electronic device, a data query condition carried in the first data request, and determining the first data that meets the data query condition.

11. The method according to claim 9 or 10, wherein the determining, by the second electronic device, first data based on the first data request comprises:
obtaining, by the second electronic device, first information and the data query condition carried in the first data request, wherein the first information is information, determined by the first electronic device, about third data that is in the first electronic device and that meets the data query condition, and the first information comprises one or more of the following information of the third data: row information, column information, and water level information;
determining, by the second electronic device, fourth data that meets the data query condition; and
determining, by the second electronic device based on the first information, the first data that needs to be synchronized and that is in the fourth data.

12. The method according to claim 11, wherein the determining, by the second electronic device based on the first information, the first data that needs to be synchronized and that is in the fourth data comprises:
determining, by the second electronic device based on the first information, that the fourth data comprises a first row of data that does not exist in the third data, and determining that the first row of data is the first data; and/or
determining, by the second electronic device based on the first information, a second row of data whose water level is higher than that of the third data and that is in the fourth data, and determining that the second row of data is the first data; and/or
determining, by the second electronic device, a first column of data based on the first information, wherein the first column of data is column data that is not comprised in the third data and that is in third rows of data with a same water level in the fourth data and the third data; and determining that the first column of data is the first data.

13. An electronic device, comprising a processor, a display, and a memory, wherein the memory and the display are coupled to the processor, the memory is configured to store computer program code, the computer program code comprises computer instructions, and when the processor reads the computer instructions from the memory, the electronic device is enabled to perform the method according to any one of claims 4 to 8.

14. An electronic device, comprising a processor, a display, and a memory, wherein the memory and the display are coupled to the processor, the memory is configured to store computer program code, the computer program code comprises computer instructions, and when the processor reads the computer instructions from the memory, the electronic device is enabled to perform the method according to any one of claims 9 to 12.

## Patentansprüche

1. Datensynchronisationssystem, wobei das System eine erste elektronische Vorrichtung (100) und eine zweite elektronische Vorrichtung (200) umfasst, wobei
die erste elektronische Vorrichtung dazu konfiguriert ist, als Reaktion auf eine erste Operation eines Benutzers eine erste Datenanforderung an die zweite elektronische Vorrichtung zu senden, wobei die erste Datenanforderung dazu verwendet wird, Daten anzufordern, die für eine erste Schnittstelle, welche die erste Operation angibt anzuzeigen, erforderlich sind, und die erste Schnittstelle einer ersten Anwendung in der zweiten elektronischen Vorrichtung entspricht;
die zweite elektronische Vorrichtung dazu konfiguriert ist, als Reaktion auf die erste Datenanforderung erste Daten an die erste elektronische Vorrichtung zu senden;
die erste elektronische Vorrichtung ferner dazu konfiguriert ist, als Reaktion auf die empfangenen ersten Daten die erste Schnittstelle anzuzeigen;
die erste elektronische Vorrichtung ferner dazu konfiguriert ist, als Reaktion auf eine zweite Operation des Benutzers eine zweite Datenanforderung an die zweite elektronische Vorrichtung zu senden, wobei die zweite Datenanforderung dazu verwendet wird, Daten anzufordern, die für eine zweite Schnittstelle, welche die zweite Operation angibt anzuzeigen, erforderlich sind, und die zweite Schnittstelle der ersten Anwendung entspricht;
die zweite elektronische Vorrichtung dazu konfiguriert ist, als Reaktion auf die zweite Datenanforderung zweite Daten an die erste elektronische Vorrichtung zu senden, wobei sich die zweiten Daten von den ersten Daten unterscheiden; und
die erste elektronische Vorrichtung ferner dazu konfiguriert ist, als Reaktion auf die empfangenen zweiten Daten die zweite Schnittstelle anzuzeigen, wobei
die erste elektronische Vorrichtung dazu konfiguriert ist, als Reaktion auf die erste Operation eine Datenabfragebedingung zu bestimmen, wobei die Datenabfragebedingung dazu verwendet wird, die Daten, die zum Anzeigen der ersten Schnittstelle erforderlich sind, abzufragen, und die Datenanforderung die Datenabfragebedingung enthält.

2. System nach Anspruch 1, wobei
die erste elektronische Vorrichtung ferner zu Folgendem konfiguriert ist: Erlangen dritter Daten, welche die Datenabfragebedingung erfüllen und die in lokalen Daten sind, und Bestimmen erster Informationen der dritten Daten, wobei die erste Datenanforderung ferner die ersten Informationen enthält und die ersten Informationen eine oder mehrere der folgenden Informationen der dritten Daten umfassen: Zeileninformationen, Spalteninformationen oder Wasserstandsinformationen.

3. System nach Anspruch 2, wobei
die zweite elektronische Vorrichtung dazu konfiguriert ist, vierte Daten zu bestimmen, welche die Datenabfragebedingung erfüllen; und
die zweite elektronische Vorrichtung dazu konfiguriert ist, basierend auf den ersten Informationen die ersten Daten zu bestimmen, die synchronisiert werden müssen und die in den vierten Daten sind, wobei sich die ersten Daten von den dritten Daten unterscheiden oder Teildaten in den ersten Daten aktualisierten dritten Daten entsprechen.

4. Datensynchronisationsverfahren, wobei das Verfahren Folgendes umfasst:
Senden (S1001), durch eine erste elektronische Vorrichtung, einer ersten Datenanforderung an eine zweite elektronische Vorrichtung als Reaktion auf eine erste Operation eines Benutzers, wobei die erste Datenanforderung dazu verwendet wird, Daten anzufordern, die für eine erste Schnittstelle, welche die erste Operation angibt anzuzeigen, erforderlich sind, und die erste Schnittstelle einer ersten Anwendung in der zweiten elektronischen Vorrichtung entspricht;
Empfangen (S1003), durch die erste elektronische Vorrichtung, erster Daten, die durch die zweite elektronische Vorrichtung gesendet werden, wobei die ersten Daten Daten sind, die durch die zweite elektronische Vorrichtung als Reaktion auf die erste Datenanforderung bestimmt werden;
Anzeigen (S1004), durch die erste elektronische Vorrichtung, der ersten Schnittstelle als Reaktion auf die empfangenen ersten Daten;
Senden (S1005), durch die erste elektronische Vorrichtung, einer zweiten Datenanforderung an die zweite elektronische Vorrichtung als Reaktion auf eine zweite Operation des Benutzers, wobei die zweite Datenanforderung dazu verwendet wird, Daten anzufordern, die für eine zweite Schnittstelle, welche die zweite Operation angibt anzuzeigen, erforderlich sind, und die zweite Schnittstelle der ersten Anwendung entspricht;
Empfangen (S1007), durch die erste elektronische Vorrichtung, zweiter Daten, die durch die zweite elektronische Vorrichtung gesendet werden, wobei die zweiten Daten Daten sind, die durch die zweite elektronische Vorrichtung als Reaktion auf die zweite Datenanforderung bestimmt werden, und sich die zweiten Daten von den ersten Daten unterscheiden; und
Anzeigen (S1008), durch die erste elektronische Vorrichtung, der zweiten Schnittstelle als Reaktion auf die empfangenen zweiten Daten, wobei das Senden, durch eine erste elektronische Vorrichtung, einer ersten Datenanforderung an eine zweite elektronische Vorrichtung als Reaktion auf eine erste Operation eines Benutzers Folgendes umfasst:
Bestimmen, durch die erste elektronische Vorrichtung, einer Datenabfragebedingung als Reaktion auf die erste Operation, wobei die Datenabfragebedingung dazu verwendet wird, die Daten, die zum Anzeigen der ersten Schnittstelle erforderlich sind, abzufragen; und
Senden, durch die erste elektronische Vorrichtung, der ersten Datenanforderung an die zweite elektronische Vorrichtung, wobei die erste Datenanforderung die Datenabfragebedingung enthält.

5. Verfahren nach Anspruch 4, wobei das Verfahren ferner Folgendes umfasst:
Erlangen, durch die erste elektronische Vorrichtung, dritter Daten, welche die Datenabfragebedingung erfüllen und die in lokalen Daten sind, und Bestimmen erster Informationen der dritten Daten, wobei die erste Datenanforderung ferner die ersten Informationen enthält und die ersten Informationen eine oder mehrere der folgenden Informationen der dritten Daten umfassen: Zeileninformationen, Spalteninformationen und Wasserstandsinformationen.

6. Verfahren nach Anspruch 5, wobei das Erlangen, durch die erste elektronische Vorrichtung, dritter Daten, welche die Datenabfragebedingung erfüllen und die in lokalen Daten sind, und das Bestimmen erster Informationen der dritten Daten Folgendes umfasst:
Abfragen, durch die erste elektronische Vorrichtung, der dritten Daten, welche die Datenabfragebedingung erfüllen und die in den lokalen Daten sind, die in einem ersten Speicherraum gespeichert sind; und
Bestimmen, durch die erste elektronische Vorrichtung, der ersten Informationen der dritten Daten nach Zwischenspeichern der dritten Daten in einen zweiten Speicherraum.

7. Verfahren nach Anspruch 6, wobei das Anzeigen, durch die erste elektronische Vorrichtung, der ersten Schnittstelle als Reaktion auf die empfangenen ersten Daten Folgendes umfasst:
Aktualisieren, durch die erste elektronische Vorrichtung, der dritten Daten in dem zweiten Speicherraum basierend auf den empfangenen ersten Daten; und
Anzeigen, durch die erste elektronische Vorrichtung, der ersten Schnittstelle basierend auf aktualisierten Daten in dem zweiten Speicherraum.

8. Verfahren nach einem der Ansprüche 4 bis 7, wobei das Verfahren ferner Folgendes umfasst:
Aktualisieren, durch die erste elektronische Vorrichtung, der lokalen Daten basierend auf den ersten Daten.

9. Datensynchronisationsverfahren, wobei das Verfahren Folgendes umfasst:
Empfangen (S1001), durch eine zweite elektronische Vorrichtung, einer ersten Datenanforderung, die durch eine erste elektronische Vorrichtung gesendet wird, wobei die erste Datenanforderung eine Anforderung ist, die durch die erste elektronische Vorrichtung als Reaktion auf eine erste Operation eines Benutzers bestimmt wird und die dazu verwendet wird, Daten zu erlangen, die für eine erste Schnittstelle, welche die erste Operation angibt anzuzeigen, erforderlich sind, und die erste Schnittstelle einer ersten Anwendung in der zweiten elektronischen Vorrichtung entspricht;
Bestimmen (S1002), durch die zweite elektronische Vorrichtung, erster Daten basierend auf der ersten Datenanforderung;
Senden (S1003), durch die zweite elektronische Vorrichtung, der ersten Daten an die erste elektronische Vorrichtung, wobei die ersten Daten durch die erste elektronische Vorrichtung dazu verwendet werden, die erste Schnittstelle anzuzeigen;
Empfangen (S1005), durch die zweite elektronische Vorrichtung, einer zweiten Datenanforderung, die durch die erste elektronische Vorrichtung gesendet wird, wobei die zweite Datenanforderung eine Anforderung ist, die durch die erste elektronische Vorrichtung als Reaktion auf eine zweite Operation des Benutzers bestimmt wird und die dazu verwendet wird, Daten zu erlangen, die für eine zweite Schnittstelle, welche die zweite Operation angibt anzuzeigen, erforderlich sind, und die zweite Schnittstelle der ersten Anwendung entspricht;
Bestimmen (S1006), durch die zweite elektronische Vorrichtung, zweiter Daten basierend auf der zweiten Datenanforderung, wobei sich die zweiten Daten von den ersten Daten unterscheiden; und
Senden (S1007), durch die zweite elektronische Vorrichtung, der zweiten Daten an die erste elektronische Vorrichtung, wobei die zweiten Daten durch die erste elektronische Vorrichtung dazu verwendet werden, die zweite Schnittstelle anzuzeigen.

10. Verfahren nach Anspruch 9, wobei das Bestimmen, durch die zweite elektronische Vorrichtung, erster Daten basierend auf der ersten Datenanforderung Folgendes umfasst:
Erlangen, durch die zweite elektronische Vorrichtung, einer Datenabfragebedingung, die in der ersten Datenanforderung enthalten ist, und Bestimmen der ersten Daten, welche die Datenabfragebedingung erfüllen.

11. Verfahren nach Anspruch 9 oder 10, wobei das Bestimmen, durch die zweite elektronische Vorrichtung, erster Daten basierend auf der ersten Datenanforderung Folgendes umfasst:
Erlangen, durch die zweite elektronische Vorrichtung, erster Informationen und der Datenabfragebedingung, die in der ersten Datenanforderung enthalten ist, wobei die ersten Informationen Informationen, die durch die erste elektronische Vorrichtung bestimmt werden, über dritte Daten sind, die in der ersten elektronischen Vorrichtung sind und welche die Datenabfragebedingung erfüllen, und die ersten Informationen eine oder mehrere der folgenden Informationen der dritten Daten umfassen: Zeileninformationen, Spalteninformationen und Wasserstandsinformationen;
Bestimmen, durch die zweite elektronische Vorrichtung, vierter Daten, welche die Datenabfragebedingung erfüllen; und
Bestimmen, durch die zweite elektronische Vorrichtung basierend auf den ersten Informationen, der ersten Daten, die synchronisiert werden müssen und die in den vierten Daten sind.

12. Verfahren nach Anspruch 11, wobei das Bestimmen, durch die zweite elektronische Vorrichtung basierend auf den ersten Informationen, der ersten Daten, die synchronisiert werden müssen und die in den vierten Daten sind, Folgendes umfasst:
Bestimmen, durch die zweite elektronische Vorrichtung, basierend auf den ersten Informationen, dass die vierten Daten eine erste Zeile von Daten umfassen, die in den dritten Daten nicht vorhanden ist, und Bestimmen, dass die erste Zeile von Daten die ersten Daten sind; und/oder
Bestimmen, durch die zweite elektronische Vorrichtung, basierend auf den ersten Informationen, einer zweiten Zeile von Daten, deren Wasserstand höher als derjenige der dritten Daten ist und die in den vierten Daten ist, und Bestimmen, dass die zweite Zeile von Daten die ersten Daten sind; und/oder
Bestimmen, durch die zweite elektronische Vorrichtung, einer ersten Spalte von Daten basierend auf den ersten Informationen, wobei die erste Spalte von Daten Spaltendaten sind, die nicht in den dritten Daten umfasst sind und die in dritten Zeilen von Daten mit einem gleichen Wasserstand in den vierten Daten und den dritten Daten sind; und Bestimmen, dass die erste Spalte von Daten die ersten Daten sind.

13. Elektronische Vorrichtung, umfassend einen Prozessor, eine Anzeige und einen Speicher, wobei der Speicher und die Anzeige mit dem Prozessor gekoppelt sind, der Speicher dazu konfiguriert ist, einen Computerprogrammcode zu speichern, der Computerprogrammcode Computeranweisungen umfasst und, wenn der Prozessor die Computeranweisungen aus dem Speicher liest, die elektronische Vorrichtung in die Lage versetzt wird, das Verfahren nach einem der Ansprüche 4 bis 8 durchzuführen.

14. Elektronische Vorrichtung, umfassend einen Prozessor, eine Anzeige und einen Speicher, wobei der Speicher und die Anzeige mit dem Prozessor gekoppelt sind, der Speicher dazu konfiguriert ist, einen Computerprogrammcode zu speichern, der Computerprogrammcode Computeranweisungen umfasst und, wenn der Prozessor die Computeranweisungen aus dem Speicher liest, die elektronische Vorrichtung in die Lage versetzt wird, das Verfahren nach einem der Ansprüche 9 bis 12 durchzuführen.

## Revendications

1. Système de synchronisation de données, dans lequel le système comprend un premier dispositif électronique (100) et un second dispositif électronique (200), dans lequel
le premier dispositif électronique est configuré pour envoyer une première demande de données au second dispositif électronique en réponse à une première opération d'un utilisateur, dans lequel la première demande de données est utilisée pour demander les données nécessaires à une première interface que la première opération indique d'afficher, et la première interface correspond à une première application dans le second dispositif électronique ;
le second dispositif électronique est configuré pour envoyer des premières informations au premier dispositif électronique en réponse à la première demande de données ;
le premier dispositif électronique est en outre configuré pour afficher la première interface en réponse aux premières données reçues ;
le premier dispositif électronique est en outre configuré pour envoyer une seconde demande de données au second dispositif électronique en réponse à une seconde opération de l'utilisateur, dans lequel la seconde demande de données est utilisée pour demander les données nécessaires à une seconde interface que la seconde opération indique d'afficher, et la seconde interface correspond à la première application ;
le second dispositif électronique est configuré pour envoyer des deuxièmes données au premier dispositif électronique en réponse à la seconde demande de données, dans lequel les deuxièmes données sont différentes des premières données ; et
le premier dispositif électronique est en outre configuré pour afficher la seconde interface en réponse aux deuxièmes données reçues, dans lequel
le premier dispositif électronique est configuré pour déterminer une condition de requête de données en réponse à la première opération, dans lequel la condition de requête de données est utilisée pour extraire les données nécessaires à l'affichage de la première interface, et la demande de données contient la condition de requête de données.

2. Système selon la revendication 1, dans lequel
le premier dispositif électronique est en outre configuré pour : obtenir des troisièmes données qui répondent à la condition de requête de données et qui se trouvent dans des données locales, et déterminer les premières informations des troisièmes données, dans lequel la première demande de données contient en outre les premières informations, et les premières informations comprennent une ou plusieurs des informations suivantes des troisièmes données : informations de ligne, informations de colonne ou informations de niveau d'eau.

3. Système selon la revendication 2, dans lequel
le second dispositif électronique est configuré pour déterminer les quatrièmes données qui répondent à la condition de requête de données ; et
le second dispositif électronique est configuré pour déterminer, sur la base des premières informations, les premières données qui doivent être synchronisées et qui se trouvent dans les quatrièmes données, dans lequel lorsque les premières données sont différentes des troisièmes données, ou lorsque des données partielles dans les premières données correspondent à des troisièmes données mises à jour.

4. Procédé de synchronisation de données, dans lequel le procédé comprend :
l'envoi (S1001), par un premier dispositif électronique, d'une première demande de données à un second dispositif électronique en réponse à une première opération d'un utilisateur, dans lequel la première demande de données est utilisée pour demander les données nécessaires à une première interface que la première opération indique d'afficher, et la première interface correspond à une première application dans le second dispositif électronique ;
la réception (S1003), par le premier dispositif électronique, de premières données envoyées par le second dispositif électronique, dans lequel les premières données sont des données déterminées par le second dispositif électronique en réponse à la première demande de données ;
l'affichage (S1004), par le premier dispositif électronique, de la première interface en réponse aux premières données reçues ;
l'envoi (S1005), par le premier dispositif électronique, d'une seconde demande de données au second dispositif électronique en réponse à une seconde opération de l'utilisateur, dans lequel la seconde demande de données est utilisée pour demander les données nécessaires à une seconde interface que la seconde opération indique d'afficher, et la seconde interface correspond à une première application ;
la réception (S1007), par le premier dispositif électronique, de deuxièmes données envoyées par le second dispositif électronique, dans lequel les deuxièmes données sont des données déterminées par le second dispositif électronique en réponse à la seconde demande de données, et les deuxièmes données sont différentes des premières données ; et
l'affichage (S1008), par le premier dispositif électronique, de la seconde interface en réponse aux deuxièmes données reçues, dans lequel l'envoi, par un premier dispositif électronique, d'une première demande de données à un second dispositif électronique en réponse à une première opération d'un utilisateur comprend :
la détermination, par le premier dispositif électronique, d'une condition de requête de données en réponse à la première opération, dans lequel la condition de requête de données est utilisée pour extraire les données nécessaires à l'affichage de la première interface ; et
l'envoi, par le premier dispositif électronique, de la première demande de données au second dispositif électronique, dans lequel la première demande de données contient la condition de requête de données.

5. Procédé selon la revendication 4, dans lequel le procédé comprend en outre :
l'obtention, par le premier dispositif électronique, de troisièmes données qui répondent à la condition de requête de données et qui se trouvent dans des données locales, et la détermination des premières informations des troisièmes données, dans lequel la première demande de données contient en outre les premières informations, et les premières informations comprennent une ou plusieurs des informations suivantes des troisièmes données : informations de ligne, informations de colonne ou informations de niveau d'eau.

6. Procédé selon la revendication 5, dans lequel l'obtention, par le premier dispositif électronique, de troisièmes données qui répondent à la condition de requête de données et qui se trouvent dans des données locales, et la détermination de premières informations des troisièmes données comprennent :
l'extraction, par le premier dispositif électronique, des troisièmes données qui répondent à la condition de requête de données et qui se trouvent dans les données locales stockées dans un premier espace de stockage ; et
la détermination, par le premier dispositif électronique, des premières informations des troisièmes données après la mise en cache des troisièmes données dans un second espace de stockage.

7. Procédé selon la revendication 6, dans lequel l'affichage, par le premier dispositif électronique, de la première interface en réponse aux premières données reçues comprend :
la mise à jour, par le premier dispositif électronique, des troisièmes données dans le second espace de stockage sur la base des premières données reçues ; et
l'affichage, par le premier dispositif électronique, de la première interface sur la base des données mises à jour dans le second espace de stockage.

8. Procédé selon l'une quelconque des revendications 4 à 7, dans lequel le procédé comprend en outre :
la mise à jour, par le premier dispositif électronique, des données locales sur la base des premières données.

9. Procédé de synchronisation de données, dans lequel le procédé comprend :
la réception (S1001), par un second dispositif électronique, d'une première demande de données envoyée par un premier dispositif électronique, dans lequel la première demande de données est une demande qui est déterminée par le premier dispositif électronique en réponse à une première opération d'un utilisateur et qui est utilisée pour obtenir des données nécessaires à une première interface que la première opération indique d'afficher, et la première interface correspond à une première application dans le second dispositif électronique ;
la détermination (S1002), par le second dispositif électronique, de premières données sur la base de la première demande de données ;
l'envoi (S1003), par le second dispositif électronique, des premières données au premier dispositif électronique, dans lequel les premières données sont utilisées par le premier dispositif électronique pour afficher la première interface ;
la réception (S1005), par le second dispositif électronique, d'une seconde demande de données envoyée par le premier dispositif électronique, dans lequel la seconde demande de données est une demande qui est déterminée par le premier dispositif électronique en réponse à une seconde opération de l'utilisateur et qui est utilisée pour obtenir des données nécessaires à une seconde interface que la seconde opération indique d'afficher, et la seconde interface correspond à la première application ;
la détermination (S1006), par le second dispositif électronique, de deuxièmes données sur la base de la seconde demande de données, dans lequel les deuxièmes données sont différentes des premières données ; et
l'envoi (S1007), par le second dispositif électronique, des deuxièmes données au premier dispositif électronique, dans lequel les deuxièmes données sont utilisées par le premier dispositif électronique pour afficher la seconde interface.

10. Procédé selon la revendication 9, dans lequel la détermination, par le second dispositif électronique, de premières données sur la base de la première demande de données comprend :
l'obtention, par le second dispositif électronique, d'une condition de requête de données contenue dans la première demande de données, et la détermination des premières données qui répondent à la condition de requête de données.

11. Procédé selon la revendication 9 ou 10, dans lequel la détermination, par le second dispositif électronique, de premières données sur la base de la première demande de données comprend :
l'obtention, par le second dispositif électronique, de premières informations et de la condition de requête de données contenue dans la première demande de données, dans lequel les premières informations sont des informations, déterminées par le premier dispositif électronique, sur les troisièmes données qui se trouvent dans le premier dispositif électronique et qui répondent à la condition de requête de données, et les premières informations comprennent une ou plusieurs des informations suivantes des troisièmes données : informations de ligne, informations de colonne et informations de niveau d'eau ;
la détermination, par le second dispositif électronique, de quatrièmes données qui répondent à la condition de requête de données ; et
la détermination, par le second dispositif électronique sur la base des premières informations, des premières données qui doivent être synchronisées et qui se trouvent dans les quatrièmes données.

12. Procédé selon la revendication 11, dans lequel la détermination, par le second dispositif électronique sur la base des premières informations, des premières données à synchroniser et qui se trouvent dans les quatrièmes données, comprend :
la détermination, par le second dispositif électronique sur la base des premières informations, que les quatrièmes données comprennent une première ligne de données qui n'existe pas dans les troisièmes données, et la détermination que la première ligne de données correspond aux premières données ; et/ou
la détermination, par le second dispositif électronique sur la base des premières informations, d'une seconde ligne de données dont le niveau d'eau est supérieur à celui des troisièmes données et qui se trouve dans les quatrièmes données, et la détermination que la seconde ligne de données correspond aux premières données ; et/ou
la détermination, par le second dispositif électronique, d'une première colonne de données sur la base des premières informations, dans lequel la première colonne de données est une colonne de données qui n'est pas comprise dans les troisièmes données et qui se trouve dans les troisièmes lignes de données avec un même niveau d'eau dans les quatrièmes données et les troisièmes données ; et la détermination que la première colonne de données est la première donnée.

13. Dispositif électronique, comprenant un processeur, un affichage, une mémoire, dans lequel la mémoire et l'affichage sont couplés au processeur, la mémoire est configurée pour stocker un code de programme informatique, le code de programme informatique comprend des instructions informatiques, et lorsque le processeur lit les instructions informatiques à partir de la mémoire, le dispositif électronique est activé pour réaliser le procédé selon l'une quelconque des revendications 4 à 8.

14. Dispositif électronique, comprenant un processeur, un affichage, une mémoire, dans lequel la mémoire et l'affichage sont couplés au processeur, la mémoire est configurée pour stocker un code de programme informatique, le code de programme informatique comprend des instructions informatiques, et lorsque le processeur lit les instructions informatiques à partir de la mémoire, le dispositif électronique est activé pour réaliser le procédé selon l'une quelconque des revendications 9 à 12.
